# EUROPEAN PATENT APPLICATION

(11) **EP 4 471 589 A1**
(43) Date of publication of application: **04.12.2024**
(21) Application number: 22923824.1
(22) Date of filing: 27.01.2022
(51) Int. Cl.: G06F 9/48, G06F 9/54, G06F 13/10

(54) **INTRA-SERVER DELAY CONTROL DEVICE, INTRA-SERVER DELAY CONTROL METHOD, AND PROGRAM**

(71) Applicant: Nippon Telegraph And Telephone Corporation, Chiyoda-ku Tokyo 100-8116 (JP)
(72) Inventor: NATORI, Ko, Musashino-shi, Tokyo 180-8585 (JP); FUJIMOTO, Kei, Musashino-shi, Tokyo 180-8585 (JP)
(74) Representative: Dehns
(86) International application number: PCT/JP2022/003081
(87) International publication number: WO 2023/144958

(57) **Abstract**

A server delay control device (200) includes: a data arrival notification unit (220) that notifies a data processing APL (1) of data acquired by a data arrival monitoring unit (210) and passes the data to the data processing APL (1); and a sleep management unit (230) that causes a polling thread to sleep and cancels sleep of the polling thread by a hardware interrupt when a packet arrives, and the sleep management unit (230) controls a timing of the sleep by permitting the hardware interrupt on the basis of characteristics of an application program.

## Description

### Technical Field

The present invention relates to a server delay control device, a server delay control method, and a program.

### Background Art

A system is constructed and operated for each service, with the background being the progress of a virtualization technology through network functions virtualization (NFV). Instead of the above mode in which a system is constructed for each service, a mode called service function chaining (SFC) is now becoming a mainstream. The SFC is a mode in which a service function is divided into reusable module units, and the divided module units are caused to operate in an independent virtual machine (for example, VM or container) environment and thus are used as components as necessary, thereby improving operability.

As a technology for forming a virtual machine, a hypervisor environment that includes Linux (registered trademark) and a kernel-based virtual machine (KVM) is known. In this environment, a host OS (an OS installed in a physical server is called a host OS) into which a KVM module is incorporated operates as a hypervisor in a memory area called a kernel space different from a user space. In this environment, a virtual machine operates in the user space, and a guest OS (an OS installed in a virtual machine is called a guest OS) operates in the virtual machine.

Unlike a physical server in which the host OS operates, the virtual machine in which the guest OS operates is designed so that all the hardware (HW) including a network device (typically an Ethernet (registered trademark) card device or the like) performs register control necessary for interrupt processing from the HW to the guest OS and writing from the guest OS into the hardware. In such register control, notifications and processing that would normally be performed by physical hardware are emulated by software, and therefore performance is generally lower than that in the host OS environment.

To counter this performance deterioration, there is a technology for reducing HW emulation from a guest OS to a host OS or an external process existing outside its own virtual machine, and thus, enhancing communication performance and versatility with a high-speed and unified interface. As this technology, a device abstraction technology called virtio, which is a quasi-virtualization technology, has been developed and already been incorporated into many general-purpose OSs such as Linux (registered trademark) and FreeBSD (registered trademark), and is currently being used.

In virtio, data exchange through a queue designed with a ring buffer is defined by a queue operation as a transfer transport of transfer data in a single direction, in regard to consoles, file input/output, and data input/output such as network communication. Communication between the guest OS and the outside of a virtual machine itself can be realized simply through an operation using a queue without executing hardware emulation, by preparing the number and the size of queues suitable for each device at the time of activation of the guest OS by using the specification of the virtio queue.

Data transfer technologies in the server include New API (NAPI), Data Plane Development Kit (DPDK), and Kernel Busy Poll (KBP).

When a packet arrives, the New API (NAPI) performs packet processing in response to a software interrupt request after a hardware interrupt request (see Non Patent Literature 1) (see Fig. 19 described later).

The DPDK implements a packet processing function in the user space in which an application operates and, when a packet arrives, immediately pulls the packet from the user space by using a polling model. Specifically, a DPDK is a framework for performing network interface card (NIC) control, which is conventionally performed by Linux kernel (registered trademark), in a user space. The largest difference from the processing in Linux kernel lies in having a polling-based reception mechanism called a pull mode driver (PMD). Normally, in Linux kernel, interruption occurs when data reaches the NIC, and reception processing is triggered by the interruption. On the other hand, in the PMD, a dedicated thread continuously performs data arrival confirmation and reception processing. The PMD can perform high-speed packet processing by eliminating overheads such as context switches and interruptions. The DPDK greatly improves performance and a throughput of the packet processing, allowing more time to be secured for data plane application processing. However, the DPDK exclusively uses computer resources such as a central processing unit (CPU) and an NIC.

Patent Literature 1 discloses a server network delay control device (Kernel Busy Poll (KBP)). The KBP constantly monitors packet arrivals by a polling model in the kernel. Thus, softIRQ is reduced, and low-delay packet processing is realized.

### [Rx-side Packet Processing by New API (NAPI)]

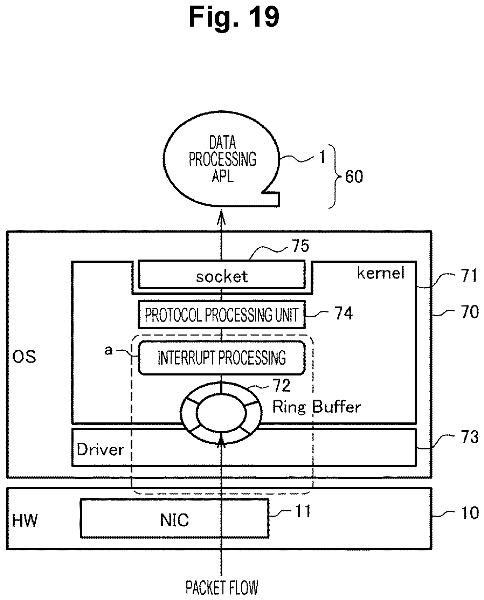

Fig. 19 is a schematic diagram of Rx-side packet processing by a New API (NAPI) implemented by Linux kernel 2.5/2.6 (see Non Patent Literature 1).

As illustrated in Fig. 19, the New API (NAPI) executes a data processing APL 1 disposed in a user space 60 that can be used by a user in a server including an OS 70 (for example, a host OS) and performs packet transfer between a NIC 11 of HW 10 connected to the OS 70 and the data processing APL 1.

The OS 70 includes a kernel 71, a ring buffer 72, and a driver 73, and the kernel 71 includes a protocol processing unit 74.

The kernel 71 is a function of a core of the OS 70 (for example, a host OS) and manages monitoring of hardware and an execution state of a program for each process. Here, the kernel 71 responds to a request from the data processing APL 1 and transmits a request from the HW 10 to the data processing APL 1. The kernel 71 processes the request from the data processing APL 1 via a system call ("a user program operating in an unprivileged mode" requests "a kernel operating in a privileged mode" to perform processing).

The kernel 71 transmits a packet to the data processing APL 1 via a socket 75. The kernel 71 receives a packet from the data processing APL 1 via the socket 75.

The ring buffer 72 is managed by the kernel 71 and is located in a memory space in the server. The ring buffer 72 is a buffer of a certain size that stores a message output from the kernel 71 as a log and is overwritten from the head when exceeding an upper limit size.

The driver 73 is a device driver for monitoring the hardware with the kernel 71. Note that the driver 73 depends on the kernel 71 and turns into a different device when a created (built) kernel source changes. In this case, the corresponding driver source is obtained and is rebuilt in the OS in which the driver is used, and thus the driver is created.

The protocol processing unit 74 performs protocol processing of L2 (data link layer)/L3 (network layer)/L4 (transport layer), which is defined by an open systems interconnection (OSI) reference model.

The socket 75 is an interface for the kernel 71 to perform interprocess communication. The socket 75 has a socket buffer and does not frequently cause data copy processing. A flow until communication is established via the socket 75 is as follows. 1. The server creates a socket file for accepting clients. 2. A name is given to the acceptance socket file. 3. A socket queue is created. 4. The first one of connections from the clients in the socket queue is accepted. 5. The client creates a socket file. 6. The client issues a connection request to the server. 7. The server creates a connection socket file separately from the acceptance socket file. As a result of communication establishment, the data processing APL 1 can call a system call such as read () or write () from the kernel 71.

In the above configuration, the kernel 71 receives a packet arrival notification from the NIC 11 through a hardware interrupt (hardIRQ) and schedules a software interrupt (softIRQ) for packet processing.

When a packet arrives, the above New API (NAPI) implemented by the Linux kernel 2.5/2.6 performs packet processing through the software interrupt (softIRQ) after the hardware interrupt (hardIRQ). As illustrated in Fig. 19, in packet transfer using an interrupt model, a packet is transferred through interrupt processing (see reference sign a in Fig. 19). Therefore, queueing for the interrupt processing is generated, which increases a packet transfer delay.

An overview of NAPI Rx-side packet processing will be described below.

### [Rx-side Packet Processing Configuration by New API (NAPI)]

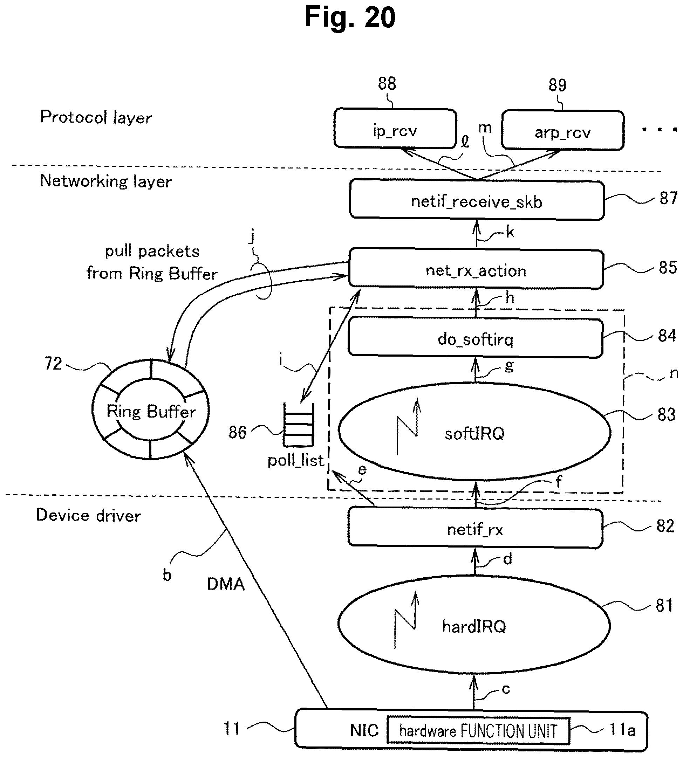

Fig. 20 illustrates an overview of the Rx-side packet processing by the New API (NAPI) for a portion surrounded by a broken line in Fig. 19.

### <Device driver>

As illustrated in Fig. 20, the NIC 11 (physical NIC), which is a network interface card, hardIRQ 81 serving as a handler that is called in response to issuance of a processing request from the NIC 11 and executes the requested processing (hardware interrupt), and netif_rx 82 serving as a software interrupt processing functional unit are disposed in a device driver.

### <Networking layer>

In a networking layer, softIRQ 83 serving as a handler that is called in response to issuance of a processing request from the netif_rx 82 and executes the requested processing (software interrupt) and do_softirq 84 serving as a control functional unit that executes the software interrupt (softIRQ) are disposed. Further, net_rx_action 85 serving as a packet processing functional unit that executes processing upon receipt of the software interrupt (softIRQ), poll_list 86 that registers information regarding a net device (net_device) indicating to which device the hardware interrupt from the NIC 11 belongs, netif_receive_skb 87 that creates a sk_buff structure (a structure for allowing the kernel 71 to perceive a state of a packet), and the ring buffer 72 are disposed.

### <Protocol layer>

In a protocol layer, ip_rcv 88, arp_rcv 89, and the like, which are packet processing functional units, are disposed.

The above netif_rx 82, do_softirq 84, net_rx_action 85, netif_receive_skb 87, ip_rcv 88, and arp_rcv 89 are program components (names of functions) to be used for the packet processing in the kernel 71.

### [Rx-side Packet Processing Operation by New API (NAPI)]

Arrows (reference signs) b to m in Fig. 20 indicate a flow of the Rx-side packet processing.

When receiving a packet (or a frame) in a frame from an opposing device, a hardware functional unit 11a of the NIC 11 (hereinafter, referred to as the NIC 11) copies a packet that has arrived at the ring buffer 72 by direct memory access (DMA) transfer (see reference sign b in Fig. 20), without using the CPU. The ring buffer 72 is the memory space in the server and is managed by the kernel 71 (see Fig. 19).

However, the kernel 71 cannot recognize the packet just because the NIC 11 copies the packet that has arrived at the ring buffer 72. Therefore, when the packet arrives, the NIC 11 puts a hardware interrupt (hardIRQ) into the hardIRQ 81 (see reference sign c in Fig. 20), and the netif_rx 82 executes the processing described below, the kernel 71 recognizes the packet. Note that the hardIRQ 81 surrounded by an ellipse in Fig. 20 represents a handler, not a functional unit.

The netif_rx 82 has a function of actually performing processing, and, when the hardIRQ 81 (handler) starts (see reference sign d in Fig. 20), the netif_rx 82 stores, in the poll_list 86, information regarding the net device (net_device) indicating to which device the hardware interrupt from the NIC 11 belongs, which is one piece of information contained in the hardware interrupt (hardIRQ). Then, the netif_rx 82 registers pulling of a queue. Here, the pulling of a queue is to refer to content of packets accumulated in a buffer and delete, from the buffer, an entry of a queue corresponding to processing of the packets in consideration of next processing. Specifically, when packets are packed into the ring buffer 72, the netif_rx 82 registers pulling of a subsequent queue in the poll_list 86 by using a driver of the NIC 11 (see reference sign e in Fig. 20). Thus, queue pulling information caused by the packets packed into the ring buffer 72 is registered in the poll_list 86.

As described above, in <Device driver> in Fig. 20, when receiving a packet, the NIC 11 copies the packet that has arrived at the ring buffer 72 by DMA transfer. Further, the NIC 11 starts the hardIRQ 81 (handler), and the netif_rx 82 registers net_device in the poll_list 86 and schedules a software interrupt (softIRQ).

By this point, the hardware interrupt processing in <Device driver> in Fig. 20 is stopped.

Thereafter, the netif_rx 82 puts pulling of data stored in the ring buffer 72 into the softIRQ 83 (handler) through a software interrupt (softIRQ) by using information (specifically, pointers) in queues accumulated in the poll_list 86 (see reference sign f in Fig. 20) and notifies the do_softirq 84 serving as the software interrupt control functional unit of the pulling of the data (see reference sign g in Fig. 20).

The do_softirq 84 is a software interrupt control functional unit, and defines the respective functions of a software interrupt (there are various kinds of packet processing, and interrupt processing is one of them; interrupt processing is defined herein). Based on the definition, the do_softirq 84 notifies the net_rx_action 85 that actually performs software interrupt processing of a current (corresponding) software interrupt request (see reference sign h in Fig. 20).

When a turn of the softIRQ comes, the net_rx_action 85 calls a polling routine for pulling packets from the ring buffer 72 on the basis of the net_device registered in the poll_list 86 (see reference sign i in Fig. 20) and pulls the packets (see reference sign j in Fig. 20). At this time, the net_rx_action 85 continues the pulling until the poll_list 86 becomes empty.

Thereafter, the net_rx_action 85 transmits a notification to the netif_receive_skb 87 (see reference sign k in Fig. 20).

The netif_receive_skb 87 creates a sk_buff structure, analyzes content of the packets, and passes processing to the protocol processing unit 74 in the later stage (see Fig. 19) for each type. Specifically, the netif_receive_skb 87 analyzes content of the packets. In a case where processing is performed in accordance with the content of the packets, the processing is passed to the ip_rcv 88 of <Protocol Layer> (reference sign 1 in Fig. 20). In a case of L2, for example, the processing is passed to the arp_rcv 89 (reference sign m in Fig. 20).

Fig. 21 illustrates an example of transfer of video image data (30 FPS). The workload illustrated in Fig. 21 is to intermittently perform data transfer every 30 ms at a transfer rate of 350 Mbps.

Fig. 22 is a graph illustrating the usage rate of the CPU that is being used by a busy poll thread in the KBP disclosed in Patent Literature 1.

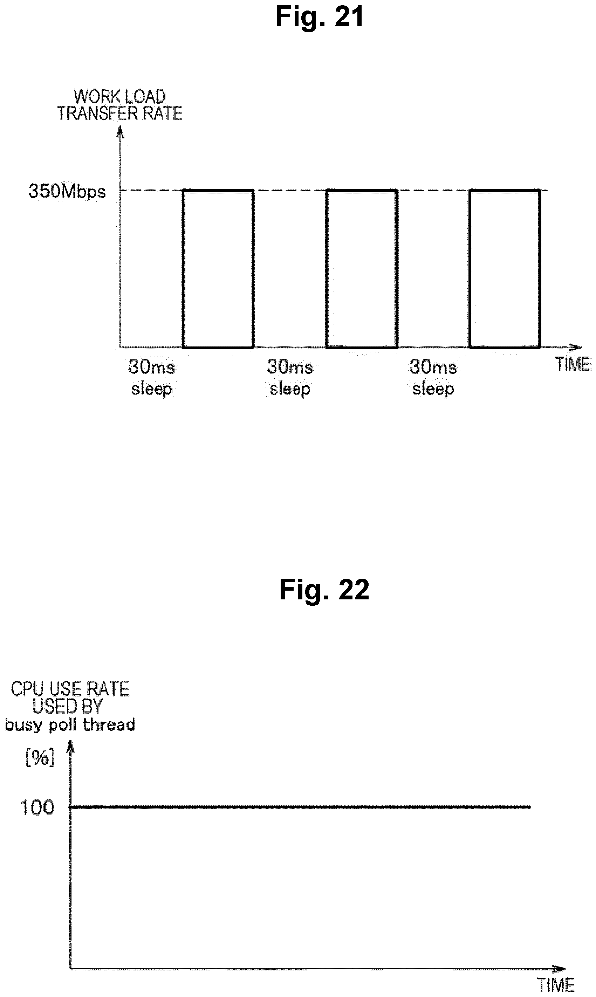

As illustrated in Fig. 22, in the KBP, the kernel thread occupies the CPU core to perform busy polling. Even in the intermittent packet reception illustrated in Fig. 21, the CPU is always used in the KBP, regardless of whether a packet arrives or not. Therefore, there is the problem of an increase in power consumption.

Next, a DPDK system will be described.

### [DPDK system configuration]

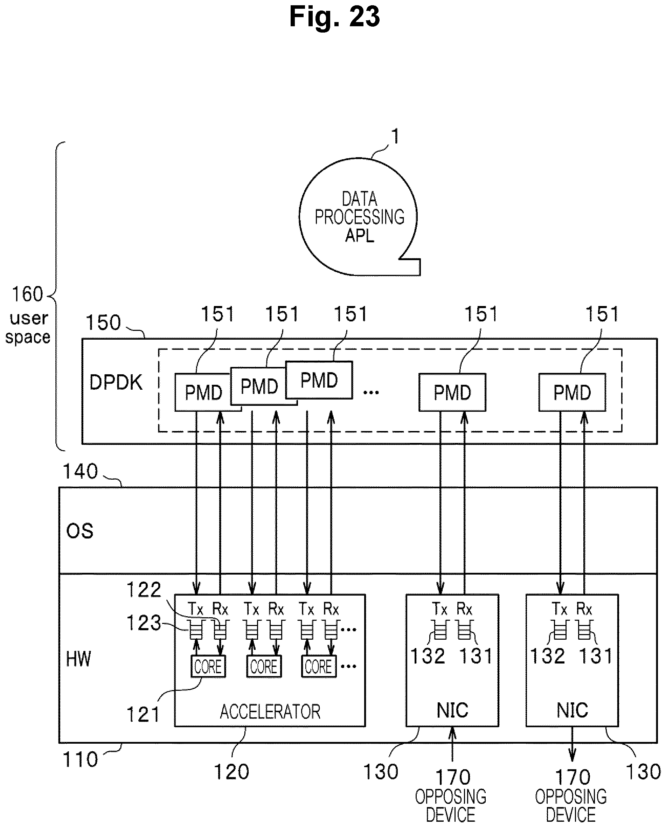

Fig. 23 is a diagram illustrating a configuration of a DPDK system that controls an HW 110 including an accelerator 120.

The DPDK system includes the HW 110, an OS 140, a DPDK 150 that is high-speed data transfer middleware disposed in a user space 160, and the data processing APL 1.

The data processing APL 1 is packet processing performed prior to execution of an APL.

The HW 110 performs data transmission/reception communication with the data processing APL 1. In the description below, as illustrated in Fig. 23, a data flow in which the data processing APL 1 receives packets from the HW 110 will be referred to as Rx-side reception, and a data flow in which the data processing APL 1 transmits packets to the HW 110 will be referred to as Tx-side transmission.

The HW 110 includes the accelerator 120 and NICs 130 (physical NICs) for connecting to a communication network.

The accelerator 120 is computing unit hardware that performs a specific operation at high speed on the basis of an input from the CPU. Specifically, the accelerator 120 is a programmable logic device (PLD) such as a graphics processing unit (GPU) or a field programmable gate array (FPGA). In Fig. 23, the accelerator 120 includes a plurality of cores (core processors) 121 and Rx queues 122 and Tx queues 123 that hold data in a first-in-first-out list structure.

Part of the processing by the data processing APL 1 is offloaded to the accelerator 120, thereby achieving performance and power efficiency that cannot be achieved only by software (CPU processing).

There is a case of applying the above accelerator 120 in a large-scale server cluster such as a data center included in network functions virtualization (NFV) or a software defined network (SDN).

Each NIC 130 is NIC hardware that implements a NW interface and includes an Rx queue 131 and Tx queue 132 that hold data in a first-in-first-out list structure. The NIC 130 is connected to an opposing device 170 via a communication network, for example, and performs packet transmission/reception.

Note that the NIC 130 may be a SmartNIC that is a NIC equipped with an accelerator, for example. The SmartNIC is a NIC that can offload processing that applies a heavy load, such as IP packet processing that causes a decrease in throughput, thereby reducing a load on the CPU.

The DPDK 150 is a framework for performing NIC control in the user space 160 and specifically includes high-speed data transfer middleware. The DPDK 150 includes poll mode drivers (PMDs) 151 (drivers capable of selecting a data arrival in a polling mode or an interrupt mode) that are polling-based reception mechanisms. In each PMD 151, a dedicated thread continuously performs confirmation of data arrival and reception processing.

The DPDK 150 implements a packet processing function in the user space 160 in which the APL operates and, when a packet arrives, immediately pulls the packet from the user space 160 by using a polling model, thereby reducing a packet transfer delay. That is, the DPDK 150 pulls packets by polling (performs busy polling of queues in the CPU), and thus there is no queueing, and the delay is small.

Patent Literature 1 discloses a server network delay control device (Kernel Busy Poll (KBP)). The KBP constantly monitors packet arrivals by a polling model in the kernel. Thus, softIRQ is reduced, and low-delay packet processing is realized.

Packet transfer by either an interrupt model or a polling model has the following problems.

The interrupt model performs packet transfer through software interrupt processing for the kernel that has received an event (hardware interrupt) from HW to perform packet processing. Therefore, the interrupt model performs packet transfer through interrupt (software interrupt) processing, and thus conflict with another interrupt is generated, or queueing is generated when an interrupt destination CPU is used for a process having higher priority, which results in a longer delay in packet transfer. In this case, when interrupt processing is congested, a queueing delay becomes even longer.

For example, in packet transfer using an interrupt model, a packet is transferred through interrupt processing. Therefore, queueing for the interrupt processing is generated, which increases a packet transfer delay.

A mechanism in which a delay occurs in the interrupt model will be additionally described.

In a general kernel, a packet transfer process is transmitted through software interrupt processing after hardware interrupt processing.

When a software interrupt of a packet transfer process occurs, the software interrupt processing cannot be immediately performed under the conditions (1) to (3) listed below. For this reason, the interrupt processing is scheduled through arbitration by a scheduler such as ksoftirqd (the kernel thread for each CPU, which is executed when the load of a software interrupt is high), and therefore, ms-order queueing occurs.
(1) In a case of conflicting with other hardware interrupt processing
(2) In a case of conflicting with other software interrupt processing
(3) In a case of using another process or kernel thread (for example, migration thread) having high priority or an interrupt destination CPU

Under the above conditions, the software interrupt processing cannot be immediately executed.

### Citation List

### Patent Literature

Patent Literature 1: WO 2021/130828 A

### Non Patent Literature

Non Patent Literature 1: New API(NAPI), [online], [searched on January 11, 2022], the Internet <URL: http://lwn.net/2002/0321/a/napi-howto.php3>

### Summary of Invention

### Technical Problem

In a case where the polling thread for reception is deployed in the kernel as in the server network delay control device (KBP) described in Patent Literature 1, it focuses on versatility, and therefore, it is difficult to perform reception processing in consideration of characteristics of each application. As a result, low delay and power saving in reception processing may be impaired. For example, the power-saving server network delay control device described above has a function of immediately sleeping the polling thread when the reception processing ends and there is no next data arrival (poll_list becomes empty). In general, this function is expected to have an effect of enhancing power saving. On the other hand, in a case where the application has characteristics of "receiving data immediately from the kernel without inter-kernel protocol processing", the reception processing is immediately completed, and the poll_list is likely to be empty. Therefore, there is a case where sleep is started even if data is continuously received. As a result, waking up due to a hardware interrupt frequently occurs, and power saving and low delay may be impaired.

The present invention has been made in view of such a background, and an object of the present invention is to perform packet transfer for applications having different application characteristics with a shorter delay in the server while reducing power consumption.

### Solution to Problem

In order to solve the above problem, there is provided a server delay control device that is disposed in a user space and starts a thread that monitors packet arrival using a polling model, the server delay control device including: a data arrival monitoring unit that monitors a reception queue of a device by polling and acquires data when a packet has arrived; a data arrival notification unit that notifies an application program of the data acquired by the data arrival monitoring unit and passes the data to the application program; and a sleep management unit that causes the thread to sleep when no packet arrives for a predetermined period and cancels sleep of the thread by a hardware interrupt when a packet has arrived, in which the sleep management unit controls a timing of the sleep by permitting the hardware interrupt on the basis of characteristics of the application program.

### Advantageous Effects of Invention

According to the present invention, it is possible to perform packet transfer for applications having different application characteristics with a shorter delay in the server while reducing power consumption.

### Brief Description of Drawings

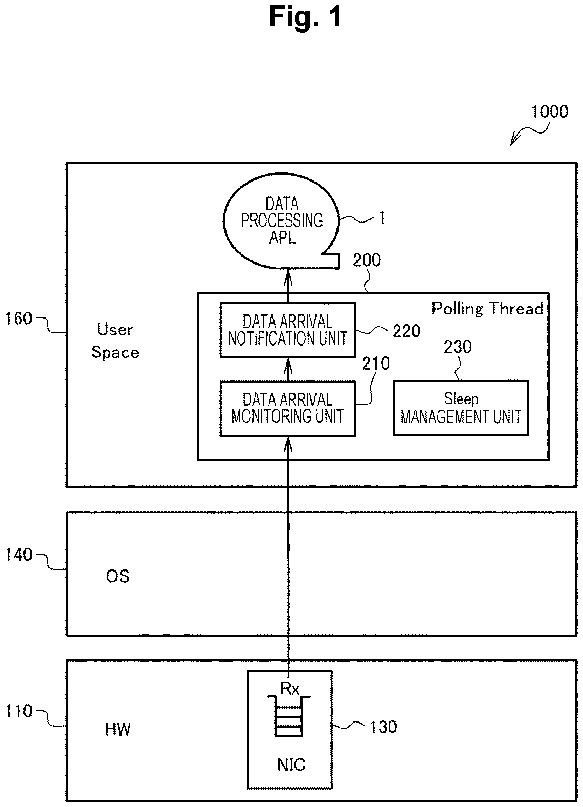

Fig. 1 is a schematic configuration diagram of a server delay control system according to a first embodiment of the present invention.

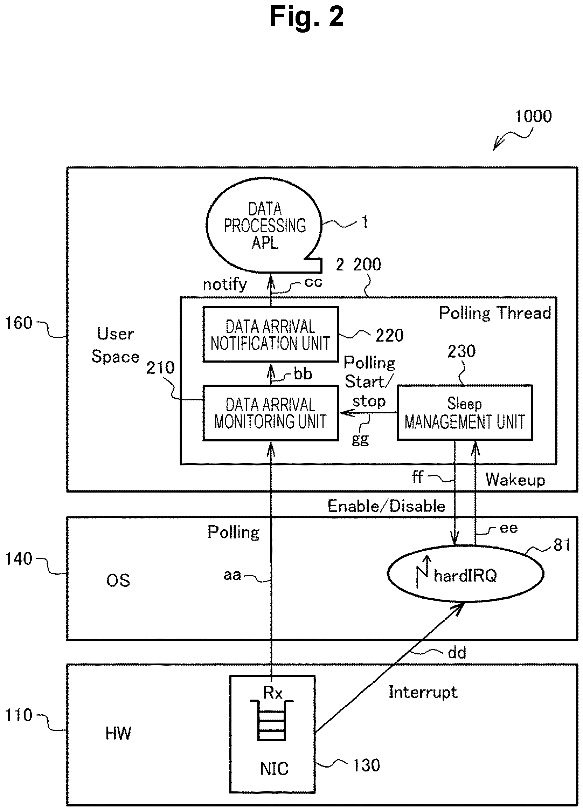

Fig. 2 is a diagram for explaining an operation of the server delay control system according to the first embodiment of the present invention.

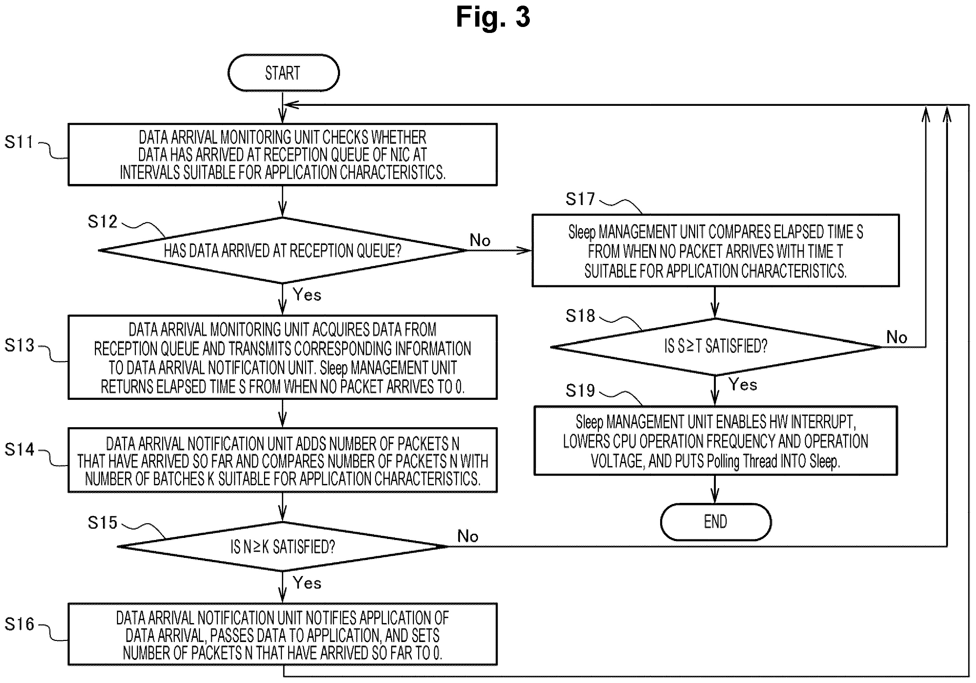

Fig. 3 is a flowchart of transfer processing (in a case where a data arrival notification unit does not process a packet) during a polling thread operation of a server delay control device of the server delay control system according to the first embodiment of the present invention.

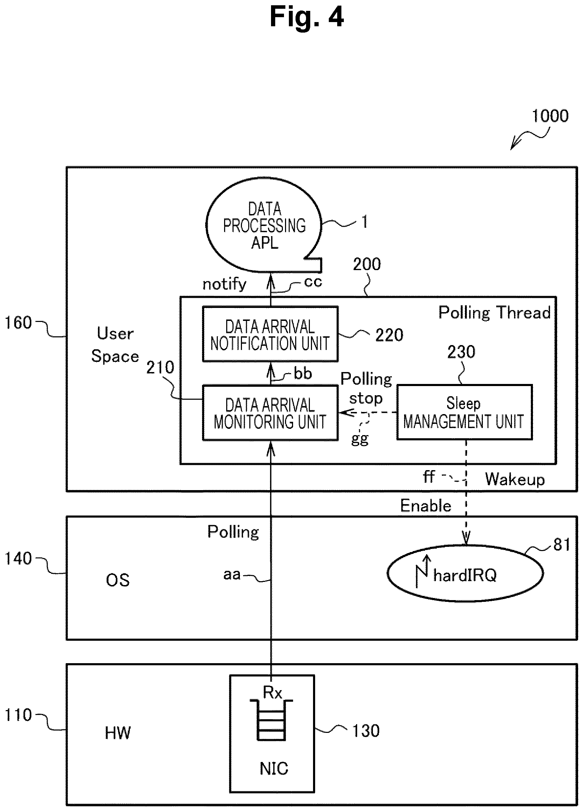

Fig. 4 is a diagram explaining operation of transfer processing (in a case where a data arrival notification unit does not process a packet) during a polling thread operation of a server delay control device of the server delay control system according to the first embodiment of the present invention.

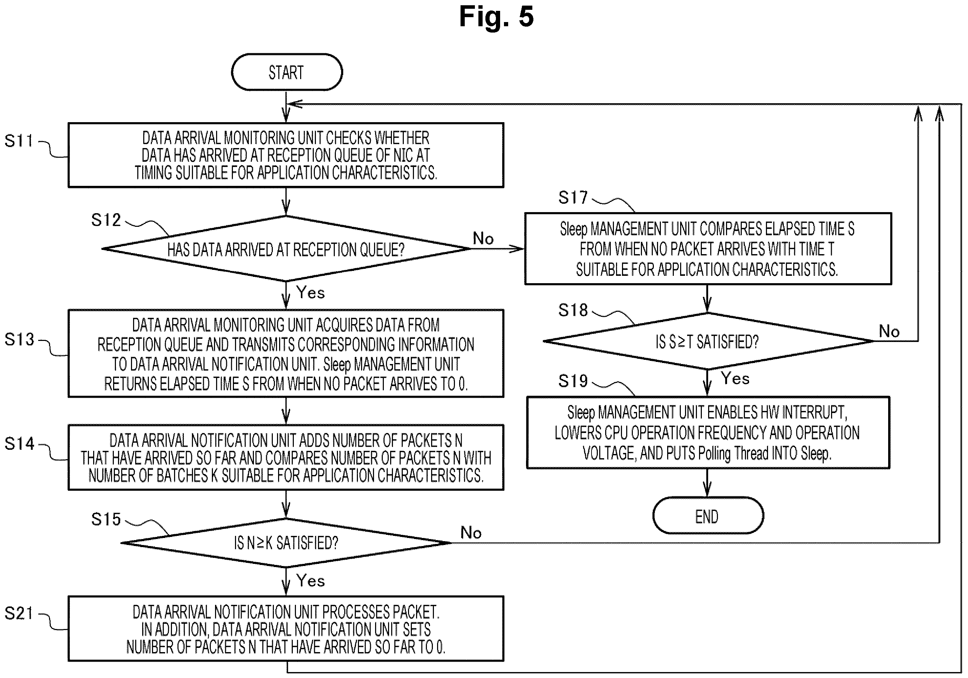

Fig. 5 is a flowchart of transfer processing (in a case where a data arrival notification unit processes a packet) during a polling thread operation of a server delay control device of the server delay control system according to the first embodiment of the present invention.

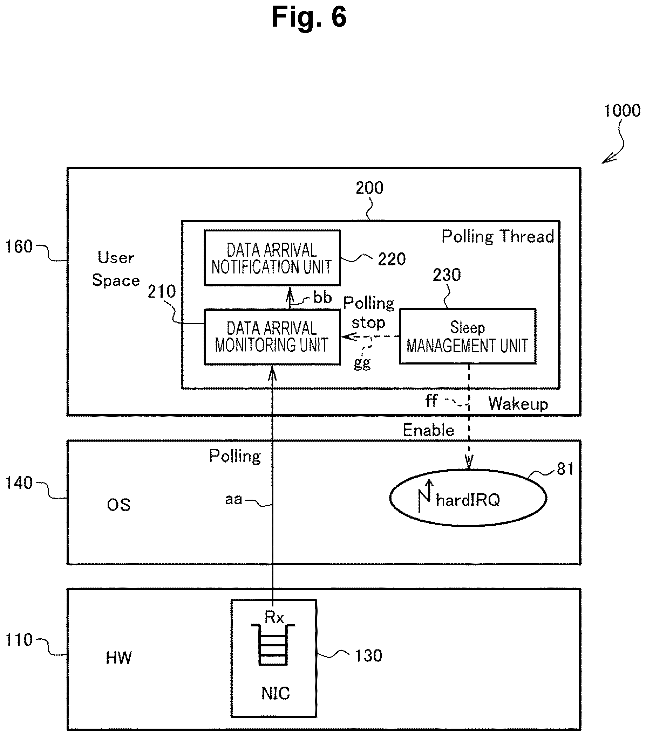

Fig. 6 is a diagram explaining operation of transfer processing (in a case where a data arrival notification unit processes a packet) during a polling thread operation of a server delay control device of the server delay control system according to the first embodiment of the present invention.

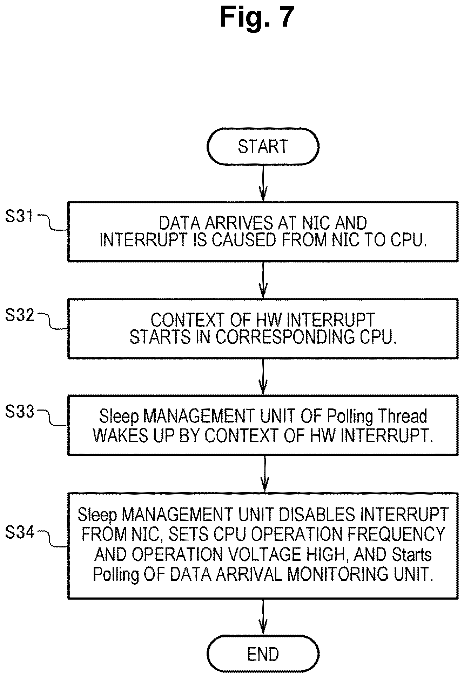

Fig. 7 is a processing flowchart from a sleep state to waking up of the polling thread of the server delay control device of the server delay control system according to the first embodiment of the present invention.

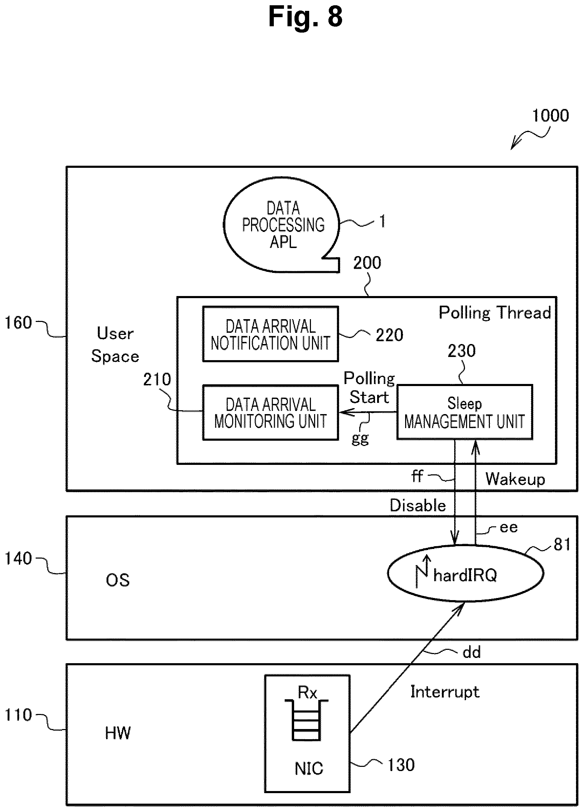

Fig. 8 is an operation explanatory diagram from a sleep state to waking up of the polling thread of the server delay control device of the server delay control system according to the first embodiment of the present invention.

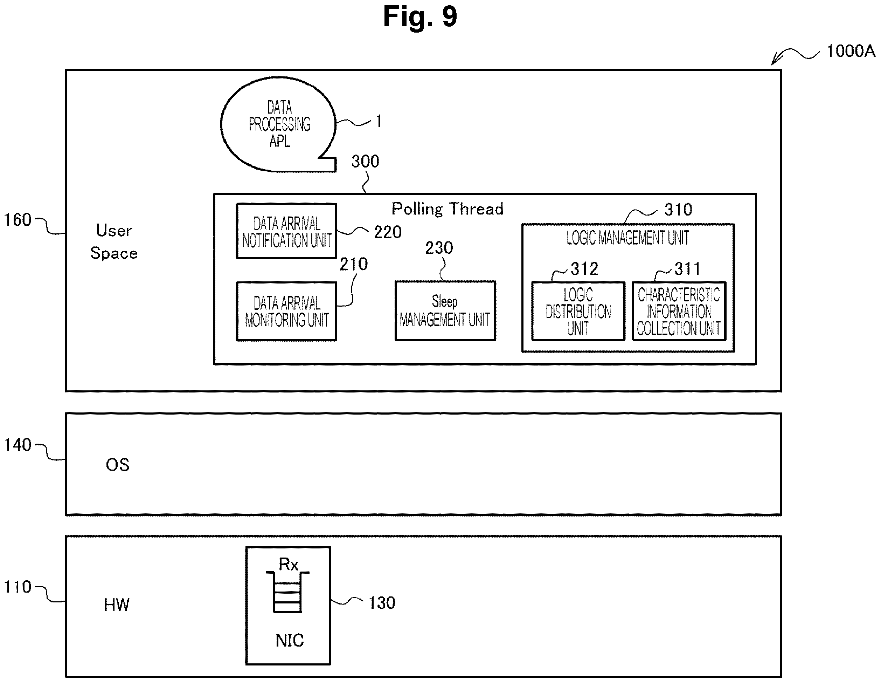

Fig. 9 is a schematic configuration diagram of a server delay control system according to a second embodiment of the present invention.

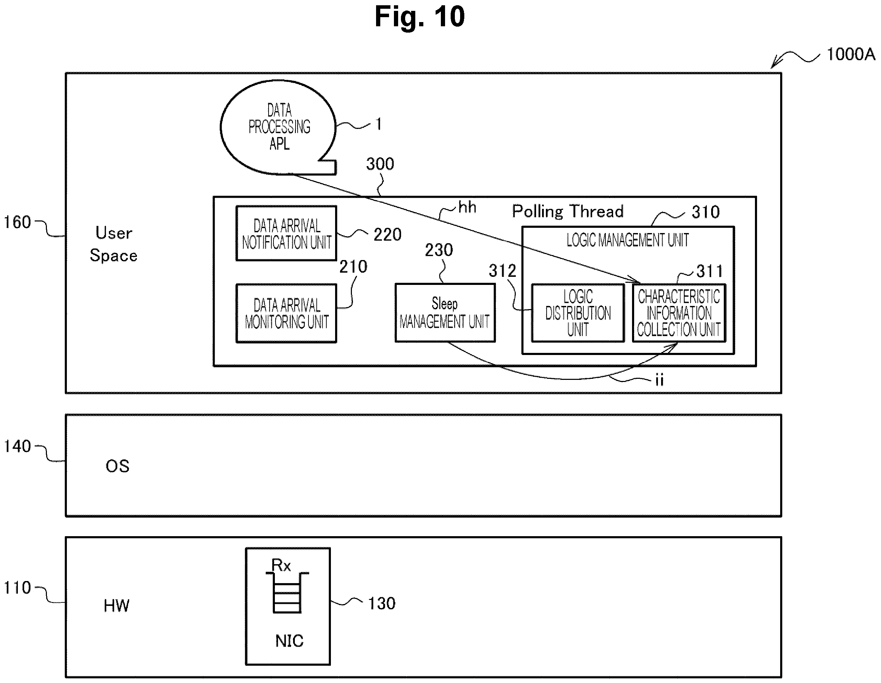

Fig. 10 is an operation explanatory diagram of characteristics information collection unit of the server delay control device of the server delay control system according to the second embodiment of the present invention.

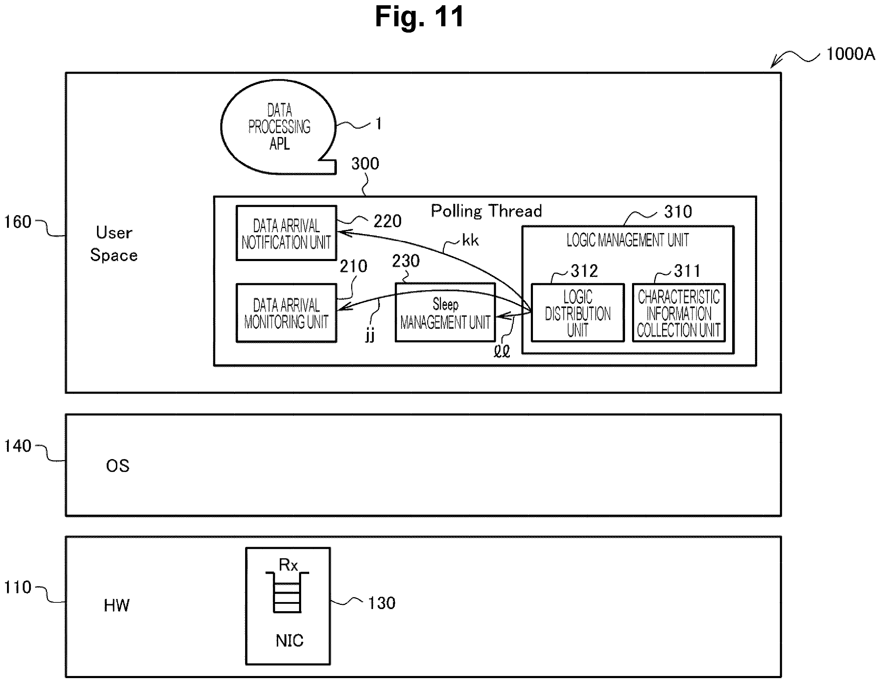

Fig. 11 is an operation explanatory diagram of a logic distribution unit of the server delay control device of the server delay control system according to the second embodiment of the present invention.

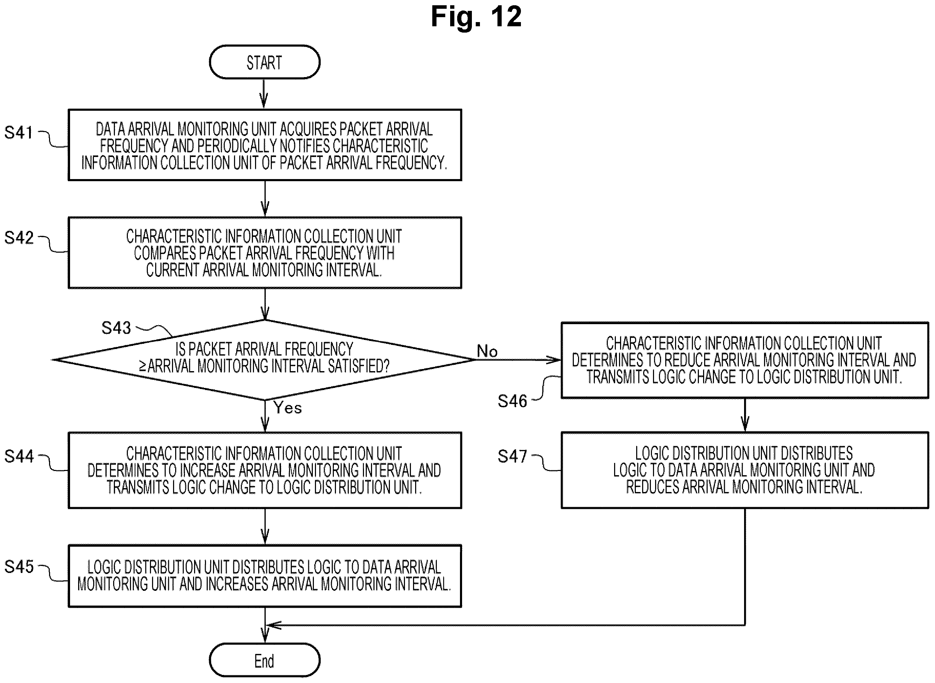

Fig. 12 is a processing flowchart of logic change to a data arrival monitoring unit in the server delay control device of the server delay control system according to the second embodiment of the present invention.

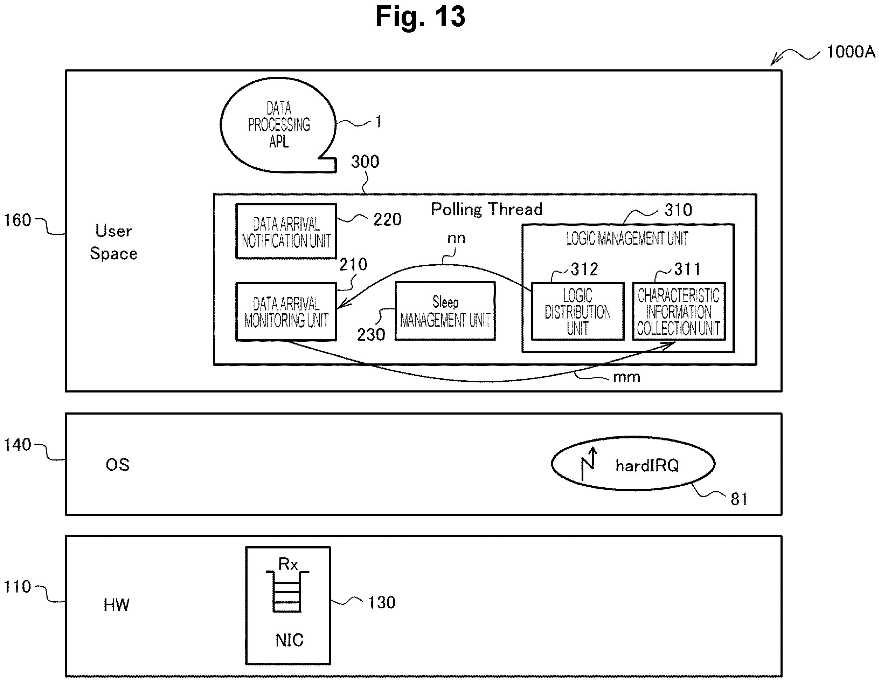

Fig. 13 is an operation explanatory diagram of logic change to a data arrival monitoring unit in the server delay control device of the server delay control system according to the second embodiment of the present invention.

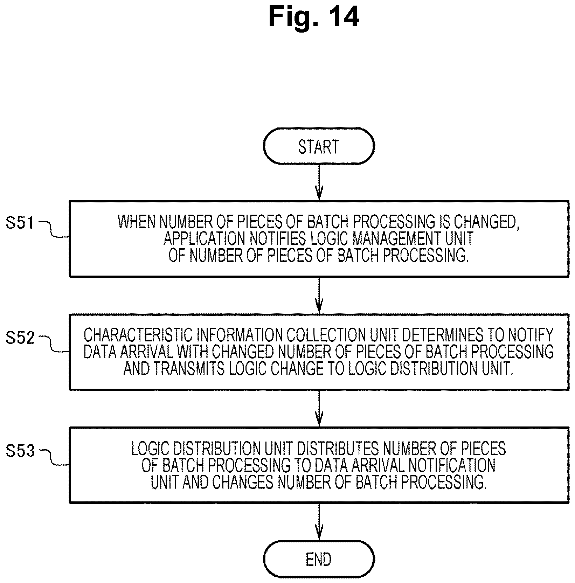

Fig. 14 is a processing flowchart of logic change to a data arrival notification unit in the server delay control device of the server delay control system according to the second embodiment of the present invention.

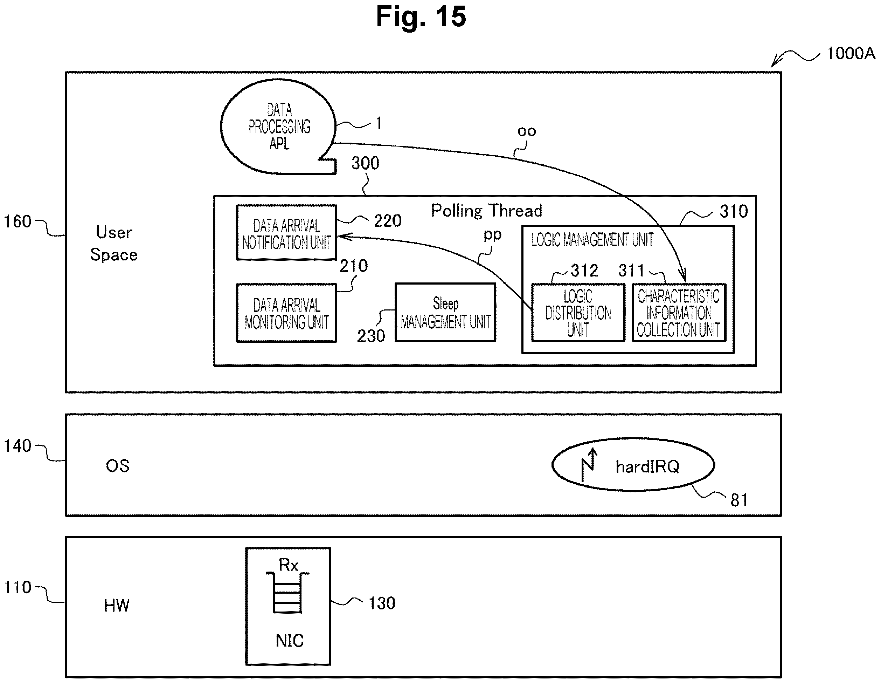

Fig. 15 is an operation explanatory diagram of logic change to a data arrival notification unit in the server delay control device of the server delay control system according to the second embodiment of the present invention.

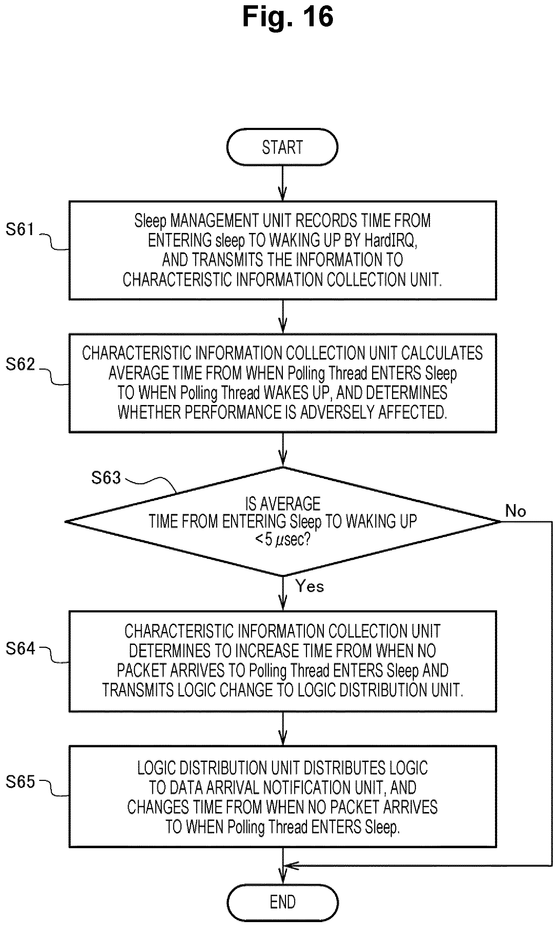

Fig. 16 is a processing flowchart of logic change to a sleep management unit in the server delay control device of the server delay control system according to the second embodiment of the present invention.

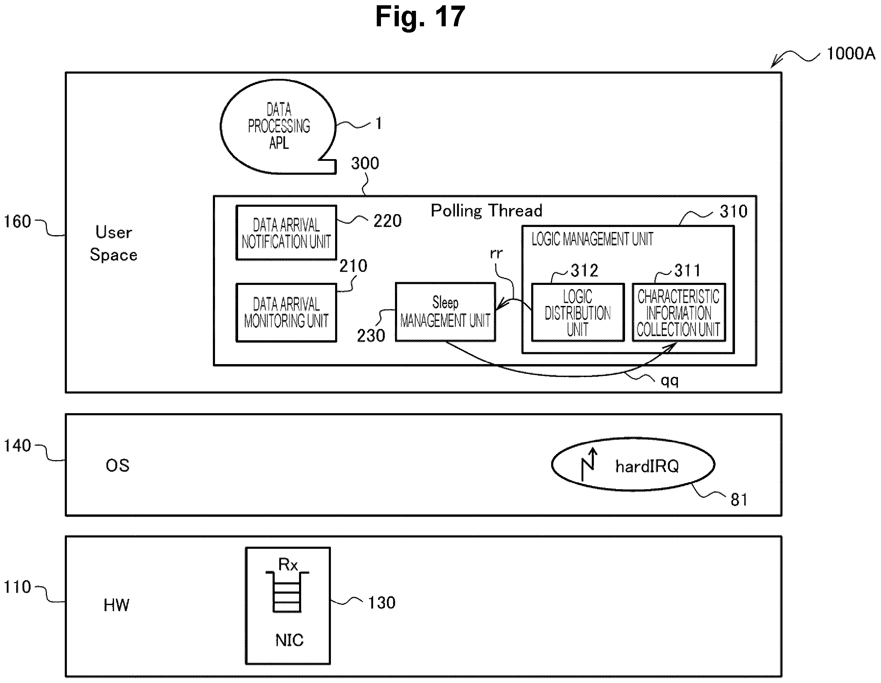

Fig. 17 is an operation explanatory diagram of logic change to a sleep management unit in the server delay control device of the server delay control system according to the second embodiment of the present invention.

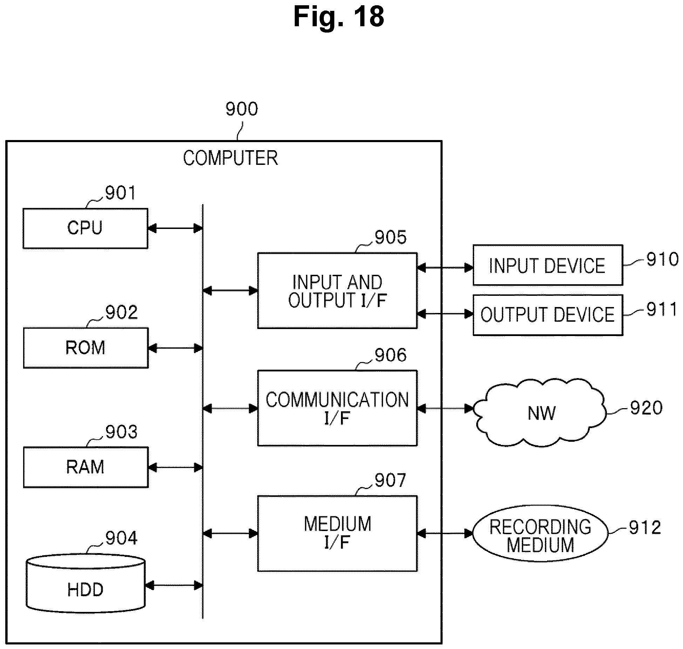

Fig. 18 is a hardware configuration diagram illustrating an example of a computer that implements the functions of the server delay control device of the server delay control system according to the first and second embodiments of the present invention.
Fig. 19 is a schematic diagram of Rx-side packet processing by a New API (NAPI) implemented by Linux kernel 2.5/2.6.
Fig. 20 illustrates an overview of the Rx-side packet processing by the New API (NAPI) for a portion surrounded by a broken line in Fig. 19.
Fig. 21 illustrates an example of video (30 FPS) data transfer.
Fig. 22 is a graph illustrating the usage rate of the CPU that is being used by a busy poll thread in the KBP disclosed in Patent Literature 1.
Fig. 23 is a diagram illustrating a configuration of a DPDK system that controls HW including an accelerator.

### Description of Embodiments

The following is a description of a server delay control system and the like according to a mode for carrying out the present invention (the mode will be hereinafter referred to as "this embodiment"), with reference to the drawings.

### (First Embodiment)

Fig. 1 is a schematic configuration diagram of a server delay control system according to a first embodiment of the present invention. The same components as those in Fig. 23 are denoted by the same reference signs as those in Fig. 23.

As illustrated in Fig. 1, a server delay control system 1000 executes a data processing application (APL) 1 application program (hereinafter, referred to as an application as appropriate) disposed in a user space 160 (user space) that can be used by a user in a server including an OS 140 (a host OS, for example), and performs packet transfer between a NIC 130 of HW 110 connected to the OS and the data processing APL 1.

The server delay control system 1000 includes the HW 110, the OS 140, a server delay control device 200 disposed in the user space 160, and a data processing APL 1.

The data processing APL 1 is packet processing performed prior to execution of an APL.

The HW 110 performs data transmission/reception communication with the data processing APL 1.

The HW 110 includes NICs 130 (device) for connecting to a communication network. The HW 110 may include an accelerator 120 illustrated in Fig. 23.

### [Server Delay Control Device]

The server delay control device 200 is a polling thread disposed in a user space. The polling thread (server delay control device 200) is provided not in an OS kernel but in the user space. Since the data reception processing is defined in the user space, the polling thread (server delay control device 200) can change the method of the reception processing according to the application characteristics (characteristics of the application program).

The server delay control device 200 includes a data arrival monitoring unit 210, a data arrival notification unit 220, and a sleep management unit 230.

### <Data Arrival Monitoring Unit 210>

The data arrival monitoring unit 210 monitors the reception queue of the device by polling, and when a packet arrives, acquires data and passes the data to the data arrival notification unit 220.

Specifically, the data arrival monitoring unit 210 monitors the reception queue of the device by polling, and when a packet has arrived, refers to the packet held in the ring buffer, and performs pulling to delete an entry of the corresponding queue from the ring buffer on the basis of processing to be performed next. That is, the data arrival monitoring unit 210 monitors the reception queue of the device by polling and performs immediate pulling.

The data arrival monitoring unit 210 checks whether data has arrived at the reception queue of the device at a predetermined timing based on the characteristics of the application.

After stopping for a predetermined time, the data arrival monitoring unit 210 checks whether data has arrived at the reception queue of the device. That is, the data arrival monitoring unit 210 performs monitoring while suppressing the number of CPU cycles by interposing a pause in polling according to the characteristics of the application.

### <Data Arrival Notification Unit 220>

The data arrival notification unit 220 notifies the application of the data acquired by the data arrival monitoring unit 210 and passes the data.

In a case where the characteristics of the application are characteristics of sequentially processing packets, the data arrival notification unit 220 immediately notifies the data at the packet arrival time. On the other hand, in a case of the characteristic of batch processing of packets, the data arrival notification unit 220 notifies the data when a predetermined number of packets arrive.

The data arrival notification unit 220 has a packet processing function, executes the packet processing function on the basis of the characteristics of the application program, and does not notify the application program when executing the packet processing function. As described above, the data arrival notification unit 220 can select a method of batch notification or a method of sequential notification in accordance with the characteristics of the application, and can further cause the functional unit to process the packet.

### <Sleep Management Unit 230>

The sleep management unit 230 controls the timing of permitting a hardware interrupt and sleeping on the basis of the characteristics of the application.

The sleep management unit 230 sleeps the polling thread to permit the HW interruption or prohibits the HW interruption to wake up the polling thread. At this time, the sleep timing can be controlled in accordance with the characteristics of the application.

The sleep management unit 230 sleeps the polling thread when no packet arrives, and is started from the hard IRQ to start polling when the packet arrives again.

At the time of polling, the sleep management unit 230 stops the polling thread and permits the HW interrupt to sleep when starting the sleep. At this time, by lowering the CPU operation frequency and the operation voltage, the power consumption during sleep is further reduced.

The sleep management unit 230 has a mechanism for controlling the timing of permitting the HW interrupt and sleeping according to the characteristics of the application. For example, in the case of an application in which a packet arrives immediately even when the reception queue of the driver becomes empty, polling can be continued.

At the time of sleep, the sleep management unit 230 is started by an HW interrupt generated at the time of packet arrival, and starts polling while prohibiting the HW interrupt. At this time, the CPU operation frequency and the voltage are reset to be high.

The sleep management unit 230 compares the elapsed time from when no packet arrives with the time suitable for the characteristics of the application, and in a case where the elapsed time from when no packet arrives is equal to or longer than the time suitable for the characteristics of the application, enables the hardware interrupt and causes the thread to sleep.

An operation of the server delay control system 1000 configured as described above will be described below.

### [Overall Operation of Server Delay Control System 1000]

Fig. 2 is a diagram for explaining an operation of the server delay control system 1000 of Fig. 1.

Arrows (reference signs) aa to gg in Fig. 2 indicate a flow of the Rx-side packet processing.

When receiving a packet (or a frame) in a frame from the opposing device, the NIC 130 transmits the packet to the data arrival monitoring unit 210 of the polling thread (server delay control device 200) while bypassing the OS 140.

### <Operation of Data Arrival Monitoring Unit 210>

The data arrival monitoring unit 210 monitors the reception queue of the device by polling (see <Polling> in Fig. 2; reference sign aa), and when the packet arrives, the packet is pulled and passes to the data arrival notification unit 220 (see reference sign bb in Fig. 2). When the delay requirement of the application is not strict or the packet arrival interval is not short, the reception monitoring can be performed while reducing the number of CPU cycles by interposing the pause in the polling (power saving).

The data arrival monitoring unit 210 starts the polling thread that monitors packet arrival, and directly monitors the reception queue of the network device. At the time of the packet arrival, the packet is immediately pulled without queuing, and thus, low-delay packet processing can be performed ("feature 1: low-delay packet transfer").

### <Operation of Data Arrival Notification Unit 220>

The data arrival notification unit 220 notifies the data processing application (APL) 1 of the data pulled by the data arrival monitoring unit 210 and passes the data to the data processing APL (<notify> in Fig. 2; reference sign cc) .

Here, the arrival notification method can be selected according to the characteristics of the application, such as "The application that sequentially processes the packet is immediately notified when data arrives" or "Notify an application that performs batch processing of packets when a certain number of data arrive".

In a case where the application is simple, by including a function of performing packet processing instead of notification, it is also possible to process the packet while reducing the overhead of the arrival notification.

The polling thread (server delay control device 200) can achieve further reduction in delay and power saving according to the characteristics of the application and the traffic information by controlling the frequency of pulling by polling, controlling the method of notifying the application of the arrived data, and controlling the timing of sleeping the polling thread according to the characteristics of the application and the traffic information ("feature 2: reception processing in consideration of application characteristics and traffic information").

### < Operation of Sleep Management Unit 230 >

The NIC 130 starts HW interrupt (hardIRQ) in hardIRQ 81 (handler) when a packet arrives (see <Interrupt> in Fig. 2; reference sign dd). When the hardwire 81 (handler) is started, at the time of sleep, the sleep management unit 230 is started (see < Wakeup > in Fig. 2; reference sign ee) by an HW interrupt generated at the time of packet arrival, and starts polling while prohibiting the HW interrupt. In other words, the sleep management unit 230 sleeps the polling thread when no packet arrives, and is started from the hard IRQ 81 to start polling when the packet arrives again.

The sleep management unit 230 sleeps the polling thread to permit the HW interruption or prohibits the HW interruption to wake up the polling thread (see <Enable/Disable> in Fig. 2; reference sign ff). At this time, the sleep timing can be controlled in accordance with the characteristics of the application.

At the time of polling, the sleep management unit 230 stops the polling thread and permits the HW interrupt to sleep when starting the sleep (see <Polling Start/stop> in Fig. 2; reference sign gg). At this time, by lowering the CPU operation frequency and the operation voltage, the power consumption during sleep is further reduced.

The sleep management unit 230 has a mechanism for controlling the timing of permitting the HW interrupt and sleeping according to the characteristics of the application. For example, in the case of an application in which a packet arrives immediately even when the reception queue of the driver becomes empty, polling can be continued.

The Sleep management unit 230 sleeps the polling thread when no packet arrives. As a result, unnecessary CPU usage is reduced, and power saving is achieved. By lowering the CPU operation voltage and the operation frequency during sleep, power saving can be further achieved ("feature 3: power saving").

The polling thread during sleep is started by the HardIRQ handler 81 at the time of a packet arrival, and thus, is immediately activated while preventing a softIRQ contention.

### <Determination Method of Parameters U, T, K>

A determination method of the parameters U, T, and K used in the flowcharts of Figs. 3 and 5 will be described below.

The polling thread (server delay control device 200) uses a data arrival monitoring interval U (parameter of the data arrival monitoring unit 210), a time T (parameter of the sleep management unit 230) from when no packet arrives until when the polling thread enters sleep, and the number of batches K (parameter of the data arrival notification unit 220) for notifying or processing the packet. In the first embodiment, the parameters U, T, and K are fixed values set in advance by the operator. In the second embodiment described later, the parameters U, T, and K are dynamically set via the logic management unit 310 (for convenience of description, it will be described here collectively).

### · Determination example of data arrival monitoring interval U

There are a fixed value set in advance by the operator and dynamic setting via the logic management unit 310 (described later).

In the case of dynamic setting via the logic management unit 310 (described later), there are the following two examples.

Example 1: The data arrival monitoring unit 210 acquires a packet arrival frequency, and sets U so that arrival monitoring can be performed at a frequency close to the packet arrival frequency.

Example 2: A maximum allowable delay is acquired from a controller outside the application or the server, and U is set so that arrival monitoring can be performed at a frequency at which the maximum allowable delay can be maintained.

### · Determination example of time T from when a packet has not arrived to entry into sleep

There are a fixed value set in advance by the operator and dynamic setting via the logic management unit 310 (described later).

In the case of dynamic setting via the logic management unit 310, there are the following two examples.

Example 1: The sleep management unit 230 acquires the time from entering sleep to waking up, and increases T in a case where the interval is short enough to adversely affect the delay time and power saving.

Example 2: A packet arrival frequency is acquired from the data arrival monitoring unit 210 or a controller outside the application or the server, and in a case where the packet arrival frequency is large, T is reduced as much as possible so that sleep can be performed.

### · Determination example of number of batches K for notifying or processing packet

The number of batches K will be described. That is, when a plurality of packets are accumulated in the Ring_Buffer area, the data arrival monitoring unit 210 pulls the plurality of packets together and passes the packets to a subsequent protocol processing unit (not illustrated). The number of pulling collectively is referred to as quota, called batch processing, and the number of processing is referred to as the number of batches (batch processing number).

There are a fixed value set in advance by the operator and dynamic setting via the logic management unit 310 (described later).

In the case of dynamic setting via the logic management unit 310 (described later), there are the following example.

Example 1: Batch processing information in an application is acquired from the application, and K is set accordingly.

Next, transfer processing during the polling thread operation will be described with reference to Figs. 3 to 6. The transfer processing during the polling thread operation includes a case where the data arrival notification unit 220 does not process the packet (see Figs. 3 and 4) and a case where the data arrival notification unit 220 processes the packet (see Figs. 5 and 6).

### [Transfer processing during polling thread operation (when data arrival notification unit 220 does not process packet)]

### <Flowchart>

Fig. 3 is a flowchart of transfer processing during polling thread operation (when data arrival notification unit 220 does not process packet).

In step S11, the data arrival monitoring unit 210 checks whether data has arrived at the reception queue of the NIC 130 at intervals suitable for the application characteristics. For example, the data arrival monitoring unit 210 temporarily stops for the time U and then checks.

In step S12, the data arrival monitoring unit 210 determines whether data has arrived at the reception queue. When the data has not arrived at the reception queue (S12: No), the process proceeds to step S17.

When the data has arrived at the reception queue (S12: Yes), in step S13, the data arrival monitoring unit 210 acquires the data from the reception queue and transmits the corresponding information to the data arrival notification unit 220 (in a case where a plurality of pieces of data have arrived at the reception queue, a plurality of pieces of data are transmitted). At this time, the sleep management unit 230 returns the elapsed time S from when no packet arrives to 0.

In step S14, the data arrival notification unit 220 adds the number of packets N that have arrived so far and compares the number of packets N with the number of batches K suitable for the application characteristics.

In step S15, the data arrival notification unit 220 determines whether N ≥ K is satisfied. If N < K (S15: No), the process returns to step S11 described above.

In a case where N ≥ K is satisfied (S15: Yes), in step S16, the data arrival notification unit 220 notifies the application of the data arrival, passes the data to the application, and sets the number of packets N that have arrived so far to 0, and the process returns to step S11 described above.

In step S17, the sleep management unit 230 compares the elapsed time S from when no packet arrives with the time T suitable for the application characteristics.

In step S18, the sleep management unit 230 determines whether S ≥ T. If S < T (S18: No), the process returns to step S11 described above.

When S ≥ T (S18: Yes), in step S19, the sleep management unit 230 enables the HW interrupt, lowers the CPU operation frequency and the operation voltage, and puts the polling thread into sleep, and ends the processing of this flow.

The number of batches K (≥ 1), the time T (≥ 0) suitable for application characteristics, and the pause time U (≥ 0) will be described. K, T, and U are set in advance by the operator. K, T, and U are dynamically changed by a logic management unit 310 (in the second embodiment, a determination example of K, T, and U will be described later) to be described later.

### <Operation explanatory diagram>

Fig. 4 is a diagram explaining operation of transfer processing (in a case where a data arrival notification unit 220 does not process a packet) during a polling thread operation.

When receiving the packet, the NIC 130 copies the packet directly to a ring buffer (buffer on the main memory) without passing through a CPU by direct memory access (DMA) (see <Polling> in Fig. 4; reference sign aa). This ring buffer is set in advance so that it can be directly accessed from the polling thread of the user space 160 without passing through the OS kernel.

The NIC 130 causes an interrupt to the CPU driven by the polling thread, and the CPU notifies the polling thread of waking up in the context of a hardware interrupt, and causes the sleep management unit 230 to wake up. Thereafter, in the CPU, the polling thread is operated.

The sleep management unit 230 sets the frequency of the CPU high and prohibits an interrupt to the CPU (see <Enable> in Fig. 4; reference sign ff). The CPU frequency can also be changed from the user space 160 by setting CPU governor.

The sleep management unit 230 instructs the data arrival monitoring unit 210 to start polling (see <polling stop> in Fig. 4; reference sign gg). Specifically, the polling start instruction is to call a function corresponding to processing of the data arrival monitoring unit 210 from the sleep management unit 230.

The data arrival monitoring unit 210 performs arrival confirmation for the ring buffer area in which the packet is subjected to DMA at the arrival confirmation interval determined in advance by the operator, and transmits address information (pointer) of the packet to the data arrival notification unit 220 when the packet has arrived (see reference sign bb in Fig. 4).

The data arrival notification unit 220 checks whether the number of pieces of pointer information transmitted from the data arrival monitoring unit 210 has reached the number of batches for which the operator is notified of packets determined in advance (steps S14 to S15 in Fig. 3).

In a case where the number of pieces of the transmitted pointer information has reached the determined number of batches to be notified of the packets, the process proceeds to the processing as below. Otherwise, the process returns to the packet arrival confirmation by the data arrival monitoring unit 210.

The data arrival notification unit 220 stores the address information in the shared memory of the application and the polling thread, wakes a thread in which the application operates, and executes processing in the thread (see <notify> in Fig. 4; reference sign cc).

In a case where the time when no packet arrives continues for a time determined in advance by the operator, the data arrival monitoring unit 210 calls the sleep management unit 230 (step S12 in Fig. 3). When the data arrival monitoring unit 210 performs return, the process returns to the sleep management unit 230.

The sleep management unit 230 lowers the CPU frequency, enables interruption to the CPU, and puts the polling thread into the sleep state (step S19 in Fig. 3).

### [Transfer processing during polling thread operation (when data arrival notification unit 220 processes packet)]

When the application logic is set by the operator to be executed in the same thread, processing is performed in the polling thread.

### <Flowchart>

Fig. 5 is a flowchart of transfer processing (in a case where the data arrival notification unit 220 processes a packet) during a polling thread operation. Steps of performing the same process in the flow of Fig. 3 are denoted by the same reference numerals, and description thereof is omitted.

In step S15, the data arrival notification unit 220 determines whether N ≥ K, and in a case where N ≥ K (S15: Yes), the process proceeds to step S21.

In step S21, the data arrival notification unit 220 processes (for example, transfer processing toward another server) the packet and the process returns to step S11. In addition, the data arrival notification unit 220 sets the number of packets N that have arrived so far to 0. Since the data arrival notification unit 220 processes the packet, unlike the data arrival notification unit 220 in step S16 in Fig. 3, there is no processing of notifying the application of the data arrival and passing the data.

### <Operation explanatory diagram>

Fig. 6 is a diagram explaining operation of transfer processing (in a case where a data arrival notification unit 220 processes a packet) during a polling thread operation. The same components as those in the operation explanatory diagram of Fig. 4 are denoted by the same reference signs as those in Fig. 4, and explanation is not made herein.

The data arrival notification unit 220 processes the packet. The packet processing performed by the data arrival notification unit 220 in the polling thread is transfer processing or the like toward another server with a relatively small load.

### [Processing until polling thread wakes up from sleep state]

Fig. 7 is a processing flowchart of the polling thread from the sleep state to waking up. Fig. 8 is an operation explanatory diagram thereof. The same components as those in the operation explanatory diagram of Fig. 2 are denoted by the same reference signs as those in Fig. 2.

In step S31, data arrives at the NIC 130, and an interrupt is caused from the NIC 130 to the CPU.

In step S32, the context of the HW interrupt starts in the corresponding CPU.

In step S33, the sleep management unit 230 of the polling thread is woken up by the context of the HW interrupt.

Specifically, as illustrated in Fig. 8, the NIC 130 starts HW interrupt (hardIRQ) in hardIRQ 81 (handler) when a packet arrives (see <Interrupt> in Fig. 8; reference sign dd). When the hardwire 81 (handler) is started, at the time of sleep, the sleep management unit 230 is started (see < Wakeup > in Fig. 8; reference sign ee) by an HW interrupt generated at the time of packet arrival, and starts polling while prohibiting the HW interrupt.

In step S34, the sleep management unit disables the interrupt from the NIC 130 (see <Enable> in Fig. 8; reference symbol ff), sets the CPU operation frequency and the operation voltage high, and starts the polling of the data arrival monitoring unit 210. At the time of polling, the sleep management unit 230 stops the polling thread and permits the HW interrupt to sleep when starting the sleep (see <Polling Start> in Fig. 8; reference sign gg).

### (Second Embodiment)

Fig. 9 is a schematic configuration diagram of a server delay control system according to a second embodiment of the present invention. The same components as those in Fig. 1 are denoted by the same reference signs as those used in Fig. 1, and explanation of the overlapping portions is not made herein.

As illustrated in Fig. 9, the server delay control system 1000A includes the HW 110, the OS 140, a server delay control device 300 disposed in a user space 160, and data processing APL 1.

The server delay control device 300 includes a logic management unit 310 in addition to each functional unit (hereinafter, referred to as each functional unit) of the data arrival monitoring unit 210, the data arrival notification unit 220, and the sleep management unit 230 of the server delay control device 200 in Fig. 1.

The logic management unit 310 collects the characteristic information of the application and the processing information of the thread, and changes the processing logic of at least one functional unit among the data arrival monitoring unit 210, the data arrival notification unit 220, and the sleep management unit 230 in a case of the application in which the load varies depending on the time zone and the processing method and processing speed vary on the basis of the collected information.

### <Logic Management Unit 310>

In a case where a plurality of processing logics are conceivable for each functional unit of the server delay control device 200 in Fig. 1, the logic management unit 310 dynamically selects a processing logic and notifies each functional unit of the processing logic.

In the case of an application in which a load varies depending on a time zone and a processing method or a processing speed varies, the logic management unit 310 changes the processing logic of each functional unit in the polling thread to change the reception processing method, thereby maintaining low delay and power saving.

The logic management unit 310 includes two functional units of a characteristic information collection unit 311 and a logic distribution unit 312.

The characteristic information collection unit 311 collects characteristics of an application and traffic from the application and the polling thread. The characteristic information collection unit 311 collects information necessary for appropriately determining logic suitable for characteristics that vary with time.

The logic distribution unit 312 appropriately determines a logic suitable for each functional unit on the basis of the characteristic information of the application and the traffic collected by the characteristic information collection unit 311, and distributes the logic to each functional unit. The logic distribution unit 312 commands each functional unit to operate with logic suitable for characteristics that vary with time.

Hereinafter, the characteristic information collection unit 311 and the logic distribution unit 312 will be described in detail with reference to the operation explanatory diagram.

### <Characteristic Information Collection Unit 311>

First, the characteristic information collection unit 311 will be described.

Fig. 10 is an operation explanatory diagram of the characteristic information collection unit 311.

The characteristic information collection unit 311 collects characteristics information from the application and the polling thread.

The characteristic information collection unit 311 collects the characteristic information of the application and the processing information of the polling thread and passes the information to the logic distribution unit 312. The characteristic information of the application and the processing information of the polling thread are information for determining the logic of each functional unit. The collected information is used to determine logic suitable for each functional unit.

An example of the characteristic information of the application will be described.

An example of the characteristic information of the application includes "a change in an in-application packet processing method".

For example, when the load of the application logic increases and the packet processing method is changed from sequential processing to batch processing, the characteristic information collection unit 311 collects the information (see reference sign hh in Fig. 10). This information is used, for example, to change the processing logic of the data arrival notification unit 220 from "sequentially notify an application when data arrives" to "notify an application after K pieces of data arrive".

An example of processing information of the polling thread will be described.

Examples of processing information of the polling thread include "statistical information on time from entering sleep to being woken up".

For example, in a case where the number of cases where the user is woken up immediately after entering sleep increases, the information is collected (see reference sign ii in Fig. 10). This information is used, for example, to change the logic in which the sleep management unit 230 starts sleep from "sleep immediately when a packet does not arrive" to "sleep after a certain period of time since packet does not arrive".

Although the characteristic information of the application and the processing information of the polling thread have been exemplified as the information for determining the logic of each functional unit, the information is not limited to the characteristic information from the same server such as the application and the polling thread, and may be received from another system and utilized for selection of the logic.

For example, in a case where the server delay control device 300 is mounted on a virtualized distributed unit (vDU) server or a virtualized centralized unit (vCU) server in a virtualized radio access network (vRAN), it is possible to receive information on a service provision status from a RAN intelligent controller (RIC), which is a higher-level controller, and use the information for logic selection.

### <Logic Distribution Unit 312>

Next, the logic distribution unit 312 will be described.

Fig. 11 is an operation explanatory diagram of the logic distribution unit 312.

The logic distribution unit 312 determines and distributes logic suitable for each functional unit on the basis of the information collected by the characteristic information collection unit 311, and changes the logic of each functional unit.

### · Distribution example of data arrival monitoring logic

When a delay requirement of an application becomes weak or a data arrival frequency becomes low, the data arrival monitoring frequency may be lowered for power saving. At this time, "data arrival monitoring by the busy loop" is changed to, for example, "data arrival monitoring once in 1 us" (see reference sign jj in Fig. 11).

### · Distribution example of data arrival notification logic

When processing of the application is changed from sequential processing to batch processing, it may be better to batch the data arrival notification for low delay and power saving. At this time, the logic of "sequentially notifying the application of the data arrival" is changed to the logic of "notifying the application of the data arrival after the K pieces of data arrive" (see reference sign kk in Fig. 11).

### · Distribution example of sleep start logic

When the number of times of waking up immediately by interruption after sleep increases, in order to prevent an increase in delay and an increase in power consumption due to excessive interruption, the logic of "immediately sleep when data does not arrive" is changed to the logic of "sleep after T us from when data does not arrive" (see reference sign ll in Fig. 11).

An operation of the server delay control system 1000A configured as described above will be described below.

### [Overall Operation of Server Delay Control System 1000A]

### <Setting Items>

The logic management unit 310 operates on a CPU different from the polling thread.

A shared memory exists between each functional unit in the polling thread and the logic management unit 310.

### <Operation 1>

When receiving the packet, the NIC 130 copies the packet directly to a ring buffer (buffer on the main memory) without passing through a CPU by direct memory access (DMA). This ring buffer is set in advance so that it can be directly accessed from the polling thread of the user space without passing through the OS kernel.

The NIC 130 causes an interrupt to the CPU driven by the polling thread, and the CPU notifies the polling thread of waking up in the context of a hardware interrupt, and causes the sleep management unit 230 to wake up.

Thereafter, in the CPU, the polling thread is operated.

The sleep management unit 230 sets the frequency of the CPU high and prohibits an interrupt to the CPU. The CPU frequency can also be changed from the user space by setting CPU governor.

The sleep management unit 230 records a time from entering sleep to waking up, and stores the time in a shared memory with the logic management unit 310.

The sleep management unit 230 instructs the data arrival monitoring unit 210 to start polling (call a function corresponding to the processing of the data arrival monitoring unit 210 from the sleep management unit 230). At this time, the sleep management unit 230 reads time information from when no packet arrives to when the packet sleeps from the shared memory area with the logic management unit 310, designates the value as an argument, and calls a function corresponding to processing of the data arrival monitoring unit 210.

The data arrival monitoring unit 210 refers to the shared memory with the logic management unit 310 and reads the arrival confirmation interval. The data arrival monitoring unit 210 performs arrival confirmation for the ring buffer area in which the packet is subjected to DMA at this arrival confirmation interval, and transmits address information (pointer) of the packet to the data arrival notification unit 220 when the packet has arrived.

The data arrival notification unit 220 confirms whether the number of pieces of pointer information transmitted from the data arrival monitoring unit 210 reaches the number of batches written in the shared memory with the logic management unit 310. When the number of pieces of pointer information has reached the number of batches written in the shared memory with the logic management unit 310, the operation proceeds to the following operation. Otherwise, the process returns to the arrival confirmation operation of the data arrival monitoring unit 210, and the processing is executed in a loop.

The data arrival notification unit 220 stores the address information in the shared memory of the application and the polling thread, wakes a thread in which the application operates, and executes processing in the thread.

When the application logic (data processing APL1) is set by the operator to be executed in the same thread, processing is performed in the polling thread.

In the above description, when the time designated as the argument has elapsed in a state of a packet does not arrive, the data arrival monitoring unit 210 calls the sleep management unit 230. That is, when the data arrival monitoring unit 210 performs return, the process returns to the sleep management unit 230. The data arrival monitoring unit 210 writes the average packet arrival frequency during the polling thread operation in the shared memory with the logic management unit 310 immediately before returning the function.

The sleep management unit 230 lowers the CPU frequency, enables interruption to the CPU, and puts the polling thread into the sleep state.

When the number of batch processing is changed according to the load or the like, the application (data processing APL 1) appropriately writes the number in the shared memory with the logic management unit 310. When the application operates in a thread different from the polling thread, a shared memory is separately set in advance between the application and the logic management unit 310.

### <Operation 2>

The operation below operates on a CPU different from the polling thread, and operates independently in terms of time.

The following <Operation 2> and the above <Operation 1> can occur in parallel.

The characteristic information collection unit 311 circulates and monitors each shared memory with the function unit in the polling thread, and executes the following processing when writing is performed in the shared memory.

When the data arrival frequency is written in the shared memory with the data arrival monitoring unit 210 and the value thereof is smaller than the current data arrival confirmation interval, the data arrival frequency is set as a new data arrival confirmation interval and the logic distribution unit 312 is called (a function corresponding to the logic distribution unit 312 is called).

The logic distribution unit 312 writes a new data arrival confirmation interval in the shared memory with the data arrival monitoring unit 210.

When the number of batches has been written in the shared memory with the application, the number of batches is set as a new number of data arrival notification batches, and the logic distribution unit 312 is called (a function corresponding to the logic distribution unit 312 is called).

The logic distribution unit 312 writes the new number of data arrival notification batches in the shared memory with the data arrival notification unit 220.

When the time from sleep to waking up is written in the shared memory with the sleep management unit 230 and the value thereof is smaller than a predetermined threshold (for example, 5 µs) (since the threshold varies depending on the system, it is necessary to set the threshold in advance), it is determined to extend the time from when no packet arrives until when the polling thread enters sleep by 5 µs, and the logic distribution unit 312 is called (a function corresponding to the logic distribution unit 312 is called).

The logic distribution unit 312 writes a new "time from when no packet arrives until when the polling thread enters sleep" in the shared memory with the sleep management unit 230.

The description of the overall operation of the server delay control system 1000A ends.

### [Operation of Logic Management Unit 310]

Next, a processing example of the logic management unit 310 will be described with reference to flowcharts and operation explanatory diagrams illustrated in Figs. 12 to 17.

### <Example of Logic Change to Data Arrival Monitoring Unit 210>

First, as a processing example of the logic management unit 310, an example of a logic change to the data arrival monitoring unit 210 will be described.

Fig. 12 is a processing flowchart of a logic change to the data arrival monitoring unit 210. Fig. 13 is an operation explanatory diagram thereof. The same components as those in Fig. 11 are denoted by the same numerals.

In the flow of Fig. 12, in step S41, the data arrival monitoring unit 210 acquires the packet arrival frequency and periodically notifies the characteristic information collection unit 311 of the packet arrival frequency (see reference sign mm in Fig. 13). For example, the data arrival monitoring unit 210 transmits the packet arrival frequency to the characteristic information collection unit 311 at a timing at which polling is allowed to sleep.

In step S42, the characteristic information collection unit 311 compares the packet arrival frequency with the current arrival monitoring interval. When packet arrival frequency < arrival monitoring interval (S43: No), the process proceeds to step S46.

In step S43, when the packet arrival frequency ≥ the arrival monitoring interval (S43: Yes), the characteristic information collection unit 311 determines to increase the arrival monitoring interval (for example, increasing by 1 µs) in step S44, and transmits the logic change to the logic distribution unit 312 (see reference sign nn in Fig. 13) .

In step S45, the logic distribution unit 312 distributes the logic to the data arrival monitoring unit 210, increases the arrival monitoring interval, and ends the processing of this flow.

On the other hand, when the packet arrival frequency < the arrival monitoring interval in step S43 (S43: No), the characteristic information collection unit 311 determines to reduce the arrival monitoring interval in step S46, and transmits the logic change to the logic distribution unit 312. For example, the characteristic information collection unit 311 transmits that the arrival monitoring interval is reduced by 1 us (see reference sign nn in Fig. 13).

In step S47, the logic distribution unit 312 distributes the logic to the data arrival monitoring unit 210, reduces the arrival monitoring interval, and ends the processing of this flow.

### <Example of Logic Change to Data Arrival Notification Unit 220>

Next, as a processing example of the logic management unit 310, an example of a logic change to the data arrival notification unit 220 will be described.

Fig. 14 is a processing flowchart of a logic change to the data arrival notification unit 220. Fig. 15 is an operation explanatory diagram thereof. The same components as those in Fig. 11 are denoted by the same numerals.

In the flow of Fig. 14, when the number of pieces of batch processing is changed in step S51, the data processing APL 1 (application) notifies the logic management unit 310 of the number of pieces of batch processing (see reference sign oo in Fig. 15).

In step S52, the characteristic information collection unit 311 determines to notify the data arrival with the changed number of pieces of batch processing, and transmits the logic change to the logic distribution unit 312.

In step S53, the logic distribution unit 312 distributes the number of batch processing to the data arrival notification unit 220 (see reference sign pp in Fig. 15), changes the number of batch processing, and ends the processing of this flow.

### <Example of Logic Change to Sleep Management Unit 230>

Next, as a processing example of the logic management unit 310, an example of a logic change to the sleep management unit 230 will be described.

Fig. 16 is a processing flowchart of a logic change to the sleep management unit 230. Fig. 17 is an operation explanatory diagram thereof. The same components as those in Fig. 11 are denoted by the same numerals.

In the flow of Fig. 16, in step S61, the sleep management unit 230 records the time from entering sleep to waking up by Hard IRQ, and transmits the information to the characteristic information collection unit 311 (see reference sign qq in Fig. 17). For example, the sleep management unit 230 performs transmission via the shared memory at the timing of waking up.

In step S62, the characteristic information collection unit 311 calculates an average time from when the polling thread enters sleep until when it wakes up, and determines whether performance is adversely affected. The determination as to whether the performance is adversely affected varies depending on the system, but for example, 5 us is set as an average time from entering sleep to waking up.

In step S63, the characteristic information collection unit 311 determines whether the average time from entering sleep to waking up is 5 us.

When the average time from entering sleep to waking up is 5 us (S63: Yes), in step S64, the characteristic information collection unit 311 determines to increase the time from when no packet arrives until when the polling thread enters sleep (for example, to increase the time by 5 µs), and transmits a logic change to the logic distribution unit 312 (see reference sign rr in Fig. 17).

In step S65, the logic distribution unit 312 distributes the logic to the data arrival notification unit 220, changes the time from when no packet arrives until when the polling thread enters sleep, and ends the processing of this flow.

### [Hardware Configuration]

The server delay control devices 200, 300 according to the first and second embodiments are achieved by a computer 900 having a configuration as illustrated in Fig. 18, for example.

Fig. 18 is a hardware configuration diagram illustrating an example of the computer 900 that implements the functions of the server delay control devices 200, 300.

The computer 900 includes a CPU 901, a ROM 902, a RAM 903, an HDD 904, a communication interface (I/F) 906, an input/output interface (I/F) 905, and a media interface (I/F) 907.

The CPU 901 operates on the basis of a program stored in the ROM 902 or the HDD 904, and controls the respective components of the server delay control devices 200, 300 illustrated in Figs. 1 and 9. The ROM 902 stores a boot program to be executed by the CPU 901 when the computer 900 starts, a program depending on hardware of the computer 900, and the like.

The CPU 901 controls an input device 910, such as a mouse or a keyboard, and an output device 911, such as a display, via the input/output I/F 905. The CPU 901 acquires data from the input device 910 and outputs generated data to the output device 911 via the input/output I/F 905. Note that a graphics processing unit (GPU) or the like may be used as a processor in conjunction with the CPU 901.

The HDD 904 stores a program to be executed by the CPU 901, data to be used by the program, and the like. The communication I/F 906 receives data from another device via a communication network (for example, network (NW) 920), outputs the data to the CPU 901, and transmits data generated by the CPU 901 to another device via the communication network.

The medium I/F 907 reads a program or data stored in a recording medium 912, and outputs the program or data to the CPU 901 via the RAM 903. The CPU 901 loads a program related to target processing from the recording medium 912 into the RAM 903 via the media I/F 907 and executes the loaded program. The recording medium 912 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

For example, in a case where the computer 900 functions as the server delay control devices 200, 300 designed as a device according to this embodiment, the CPU 901 of the computer 900 implements the functions of the server delay control devices 200, 300 by executing a program loaded into the RAM 903. Further, the HDD 904 stores data in the RAM 903. The CPU 901 reads the program related to the target processing from the recording medium 912, and executes the program. Additionally, the CPU 901 may read the program related to the target processing from another device via the communication network (NW 920).

### [Application Example]

### <Example Application to a VM Configuration>

The present invention can be applied to each of a host in a virtual machine (VM) configuration and a polling thread arranged in a guest.

Thus, in the system having a VM virtual server configuration, packet transfer can be performed with a shorter delay in the server without modification to the APL in both the host OS and the guest OS.

### <Example Application to a Container Configuration>

The present invention may also be applied to the polling thread arranged in a container configuration.

In a system having a virtual server configuration such as a container, packet transfer can be performed with a shorter delay in the server, without any modification to the application.

### <Example Application to Paired Metal Configuration (Non-Virtualized Configuration)>

The present invention can be applied to a system having a non-virtualized configuration such as a paired metal configuration. In a system having a non-virtualized configuration, packet transfer can be performed with a shorter delay in the server, without any modification to the application.

### <Scale In/Out>

When an amount of traffic is large and a plurality of NIC devices or NIC ports are used, by operating a plurality of polling threads in association with the NIC devices or the NIC ports, it is possible to scale in/out the polling threads while performing HW interrupt frequency control.

### [Effects]

As described above, a server delay control device according to the first embodiment is a server delay control device 200 (see Fig. 1) that is disposed in a user space and starts a thread that monitors packet arrival using a polling model, the device including: a data arrival monitoring unit 210 that monitors a reception queue of a device (NIC 130) by polling and acquires data when a packet has arrived; a data arrival notification unit 220 that notifies an application program (data processing APL 1) of the data acquired by the data arrival monitoring unit 210 and passes the data to the application program; and a sleep management unit 230 that causes the thread (polling thread) to sleep when no packet arrives for a predetermined period and cancels sleep of the thread (polling thread) by a hardware interrupt (hardIRQ) when the packet has arrived, in which the sleep management unit 230 controls a timing of the sleep by permitting the hardware interrupt (hardIRQ) on the basis of characteristics of the application program.

With this configuration, the server delay control device 200 stops a software interrupt (softIRQ) of packet processing that is a main cause of a NW delay, the data arrival monitoring unit 210 of the server delay control device 200 executes the thread for monitoring packet arrivals, and packet processing is performed with a polling model (without any softIRQ) at the time of a packet arrival. In a case where any packet has not arrived over a predetermined period of time, the sleep management unit 230 makes the thread (the polling thread) sleep, so that the thread (the polling thread) is in a sleep state when any packet does not arrive. The sleep management unit 230 cancels the sleep with a hardware interrupt (hardIRQ) when a packet arrives. The sleep management unit 230 controls the timing of permitting a hardware interrupt and sleeping on the basis of the characteristics of the application program.

Thus, the effects (1) to (4) described below are achieved.
(1) The polling model in which the software interrupt (softIRQ) at the time of a packet arrival, which is the cause of a delay, is stopped is achieved. That is, unlike a NAPI of the existing technology, the server delay control system 1000 achieves not an interrupt model that is a main cause of a NW delay, but a polling model. At the time of the packet arrival, the packet is immediately pulled without queuing, and thus, low-delay packet processing can be performed ("low delay by a polling model is achieved").
(2) The polling thread in the server delay control device 200 monitors packet arrivals in the polling mode. The polling thread that monitors packet arrivals sleeps while there is not a packet arrival. When there is no packet arrival, since the CPU is not used by sleep, a power saving effect can be obtained ("unnecessary CPU use is reduced and power saving is achieved by sleep management of a polling thread").
(3) The method of the reception processing can be changed in accordance with the characteristics of the application program, and both low delay and power saving can be achieved even for application programs having different characteristics ("achievement of low delay and power saving according to application programs").
(4) Since the data reception processing is defined in the user space, the method of the reception processing can be changed according to the characteristics of the application program.

The present invention may be applied to a case where there is a polling thread in a user space, such as a DPDK.

As described above, the server delay control device 200 (see Fig. 1) can achieve both low delay and power saving by performing sleep management of the polling thread that performs the packet transfer processing when there is the polling thread in the user space. It is possible to achieve both low delay and power saving even for applications having different characteristics of application programs.

In the server delay control device 200, the sleep management unit 230 is characterized in that the sleep management unit 230 compares the elapsed time from when no packet arrives with the predetermined time suitable for the characteristics of the application program, and in a case where the elapsed time from when no packet arrives is equal to or longer than the time suitable for the characteristics of the application program, enables the hardware interrupt and causes the thread to sleep.

With such a configuration, the sleep management unit 230 controls the timing of permitting the HW interrupt and sleeping according to the characteristics of the application program. For example, at the time of polling, in the case of an application program in which a packet arrives immediately even when the reception queue of the driver becomes empty, the sleep management unit 230 can continue polling. Further low delay and power saving according to characteristics of the application program and traffic characteristics can be achieved.

In the server delay control device 200, the data arrival monitoring unit 210 is characterized in that the data arrival monitoring unit 210 checks whether data has arrived at the reception queue of the device at a predetermined timing based on the characteristics of the application program.

With such a configuration, by controlling the frequency of pulling by polling according to the characteristics and traffic information of the application program, it is possible to achieve further low delay and power saving according to the characteristics and traffic of the application program.

In the server delay control device 200, the data arrival monitoring unit 210 is characterized in that the data arrival monitoring unit 210 checks whether data has arrived at the reception queue of the device after stopping for a predetermined time.

With such a configuration, in a case where the delay requirement of the application program is not strict or in a case where the packet arrival interval is not short, the data arrival monitoring unit 210 can perform reception monitoring while reducing the number of CPU cycles by interposing a pause in polling (for example, after stopping for a predetermined time, it is confirmed whether data has arrived at the reception queue of the device), and can achieve power saving.

In the server delay control device 200, the data arrival notification unit 220 is characterized in that the data arrival notification unit 220 makes a notification immediately at the time of packet arrival in a case where the characteristic of the application program is characteristics of sequentially processing packets, and makes a notification when a predetermined number of packets arrive in a case where the characteristic of the application program is characteristics of batch processing of packets.

With such a configuration, the arrival notification method can be selected according to the characteristics of the application program, and further low delay according to the characteristics of the application program can be achieved.

In the server delay control device 200, the data arrival notification unit 220 is characterized in that the data arrival notification unit 220 has a packet processing function, executes the packet processing function according to the characteristics of the application program, and does not notify the application program when executing the packet processing function.

With such a configuration, in a case where the application program is simple, by including a function of performing packet processing instead of notification, it is also possible to process the packet while reducing the overhead of the arrival notification. Further low delay according to characteristics of the application program can be achieved.

The server delay control device 300 (see Fig. 9) according to the second embodiment is characterized by including the logic management unit 310 that collects the characteristic information of the application program and the processing information of the thread, and changes the processing logic of at least one functional unit among the data arrival monitoring unit 210, the data arrival notification unit 220, and the sleep management unit 230 in a case of the application program in which the load varies depending on the time zone and the processing method and processing speed vary on the basis of the collected information.

With such a configuration, the logic management unit 310 dynamically determines the processing logic of each functional unit (the data arrival monitoring unit 210, the data arrival notification unit 220, and the sleep management unit 230) of the polling thread according to the characteristics of the application program and the processing of the thread, and distributes the processing logic to each functional unit. As a result, even for an application whose characteristics dynamically fluctuate, low delay and power saving of reception processing can be maintained by operating each functional unit with a processing logic according to the fluctuating characteristics.

Note that, among the processes described in the above embodiment, all or some of the processes described as those to be automatically performed may be manually performed, or all or some of the processes described as those to be manually performed may be automatically performed by a known method. In addition to this, information including the processing procedures, the control procedures, the specific names, the various kinds of data, and the parameters mentioned above in the specification or shown in the drawings can be modified as desired, unless otherwise particularly specified.

In addition, each component of each device that has been illustrated is functionally conceptual, and is not necessarily physically configured as illustrated. In other words, a specific form of distribution and integration of individual devices is not limited to the illustrated form, and all or part of the configuration can be functionally or physically distributed and integrated in any unit according to various loads, usage conditions, and the like.

Further, some or all of the component, functions, processing units, processing means, and the like described above may be implemented by hardware, for example, by designing them in an integrated circuit. Also, the respective components, functions, and the like may be implemented by software for interpreting and executing a program for causing a processor to implement the respective functions. Information such as a program, a table, and a file for implementing the respective functions can be held in a recording device such as a memory, a hard disk, or a solid state drive (SSD), or in a recording medium such as an integrated circuit (IC) card, a secure digital (SD) card, or an optical disc.

### Reference Signs List

1 Data processing application program (APL)
10 HW
70 Guest OS
72 Ring buffer
74 Protocol processing unit
110 HW
130 NIC (physical NIC) (device)
140 OS
160 User space
200, 300 Server delay control device (polling thread)
210 Data arrival monitoring unit (each functional unit)
220 Data arrival notification unit (each functional unit)
230 Sleep management unit
310 Logic management unit
311 Characteristic information collection unit
312 Logic distribution unit
1000 Server delay control system

## Claims

1. A server delay control device that is disposed in a user space and starts a thread that monitors packet arrival using a polling model, the server delay control device comprising:
a data arrival monitoring unit that monitors a reception queue of a device by polling and acquires data when a packet has arrived;
a data arrival notification unit that notifies an application program of the data acquired by the data arrival monitoring unit and passes the data to the application program; and
a sleep management unit that causes the thread to sleep when no packet arrives for a predetermined period and cancels sleep of the thread by a hardware interrupt when a packet has arrived,
wherein the sleep management unit controls a timing of the sleep by permitting the hardware interrupt based on characteristics of the application program.

2. The server delay control device according to claim 1,
wherein the sleep management unit compares an elapsed time from when no packet arrives with a time suitable for the characteristics of the application program, and in a case where the elapsed time from when no packet arrives is equal to or longer than a predetermined time suitable for the characteristics of the application program, enables the hardware interrupt and causes the thread to sleep.

3. The server delay control device according to claim 1,
wherein the data arrival monitoring unit checks whether data has arrived at a reception queue of the device at a predetermined timing based on the characteristics of the application program.

4. The server delay control device according to claim 1,
wherein the data arrival notification unit makes a notification immediately at the time of packet arrival in a case where the characteristics of the application program are characteristics of sequentially processing packets, and makes a notification when a predetermined number of packets arrive in a case where the characteristics of the application program are characteristic of batch processing of packets.

5. The server delay control device according to claim 1,
wherein the data arrival notification unit has a packet processing function, executes the packet processing function according to the characteristics of the application program, and does not notify the application program when executing the packet processing function.

6. The server delay control device according claim 1, further comprising a logic management unit that
collects information on the characteristics of the application program and processing information of the thread, and
changes a processing logic of at least one functional unit among the data arrival monitoring unit, the data arrival notification unit, and the sleep management unit in a case of the application program in which a load varies depending on a time zone and a processing method and processing speed vary, based on the information that has been collected.

7. A server delay control method by a server delay control device that is disposed in a user space and starts a thread that monitors packet arrival using a polling model,
wherein the server delay control device performs steps of:
monitoring a reception queue of a device by polling and acquiring data when a packet has arrived;
notifying an application program of the data that has been acquired and passing the data to the application program; and
causing the thread to sleep when no packet arrives for a predetermined period and cancelling sleep of the thread by a hardware interrupt when a packet has arrived and
controlling a timing of the sleep by permitting the hardware interrupt based on characteristics of the application program.

8. A program for causing a computer to function as the server delay control device according to any one of claims 1 to 6.
